(19) **Europäisches Patentamt / European Patent Office / Office européen des brevets**

(11) **EP 4 085 275 B1**

(12) **FASCICULE DE BREVET EUROPEEN**

(45) Date de publication et mention
de la délivrance du brevet:
**08.07.2026 Bulletin 2026/28**

(21) Numéro de dépôt: **20851236.8**

(22) Date de dépôt: **29.12.2020**

(51) Classification Internationale des Brevets (IPC):
**G01T 3/00** *(2006.01)* **G21C 17/108** *(2006.01)*

(52) Classification Coopérative des Brevets (CPC):
**G01T 3/00; G21C 17/108;** Y02E 30/30

(86) Numéro de dépôt international:
**PCT/FR2020/052636**

(87) Numéro de publication internationale:
**WO 2021/136915 (08.07.2021 Gazette 2021/27)**

(54) **SYSTÈME DE MESURE DE FLUENCE EN NEUTRONS RAPIDES POUR RÉACTEUR NUCLÉAIRE, INSTALLATION ET PROCÉDÉ DE MESURE**

SYSTEM ZUR MESSUNG DER SCHNELLEN NEUTRONENFLUENZ FÜR EINEN KERNREAKTOR, ZUGEHÖRIGE ANLAGE UND MESSVERFAHREN

SYSTEM FOR MEASURING FAST NEUTRON FLUENCE FOR A NUCLEAR REACTOR, ASSOCIATED INSTALLATION AND MEASUREMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2019 FR 1915725**

(43) Date de publication de la demande:
**09.11.2022 Bulletin 2022/45**

(73) Titulaire: **Commissariat à l'Energie Atomique et aux Energies Alternatives**
**75015 Paris (FR)**

(72) Inventeurs:
• **DUMAZERT, Jonathan**
**30100 Ales (FR)**
• **MAGNE, Sylvain**
**92320 Chatillon (FR)**
• **COULON, Romain**
**92120 Montrouge (FR)**
• **LAFFONT, Guillaume**
**92190 Meudon (FR)**

(74) Mandataire: **Santarelli**
**Tour Trinity**
**1 bis Place de la Défense**
**92400 Courbevoie (FR)**

(56) Documents cités:
JP-A- H09 218 270     US-A1- 2006 249 664
US-A1- 2014 061 487

**Description**

**DOMAINE TECHNIQUE**

La présente invention concerne un système de mesure de fluence en neutrons rapides. L'invention concerne également une installation comprenant un tel système de mesure et un procédé de mesure d'une telle fluence en neutrons rapides, également appelée << fluence neutronique rapide >>.

L'invention s'applique au domaine de l'instrumentation nucléaire pour les réacteurs, plus spécifiquement la mesure neutronique *ex-core* (c'est-à-dire à l'extérieur d'une cuve abritant le cœur du réacteur).

**ÉTAT DE LA TECHNIQUE ANTÉRIEURE**

Un réacteur à eau pressurisée (REP, ou << *Pressurized Water Reactor* >>, PWR, en anglais) est conçu pour fonctionner pendant une durée opérationnelle minimale d'environ 40 ans (susceptible d'atteindre 60 ans).

De façon classique, un tel réacteur nucléaire comprend une cuve comprenant une paroi réalisée en acier et abritant le cœur du réacteur. Or, l'acier de cette paroi subit une dégradation au cours du fonctionnement du réacteur, du fait de son interaction avec des neutrons rapides générés par le cœur, qui provoquent des déplacements atomiques dans cet acier. Par exemple, la fluence neutronique rapide dans la cuve est de l'ordre de $10^{13}$ n.cm$^{-2}$.s$^{-1}$ (neutrons par centimètre carré par seconde), le débit de dose étant de l'ordre de $10^7$ Gy/h (gray par heure).

Par « neutron rapide », il est entendu, au sens de la présente invention, un neutron présentant une énergie supérieure ou égale à 1 MeV (mégaélectronvolt).

Une estimation satisfaisante du vieillissement de la paroi de cuve selon les critères imposés par les autorités de sûreté, par exemple l'ASN en France (acronyme de « Autorité de Sûreté Nucléaire ») requiert donc de doser la fluence neutronique rapide subie par la paroi de cuve de façon fiable.

A cet effet, il est connu d'utiliser des dosimètres à film niobium encapsulés en boitier d'aluminium pour réaliser une telle mesure.

De tels dosimètres sont déposés au niveau d'une surface externe de la cuve et sont activés par le rayonnement neutronique issu du cœur du réacteur. La réaction $^{93}$Nb (n, n') $^{93m}$Nb du niobium présentant un seuil d'activation en énergie comparable au seuil de dégradation des aciers (environ 0,9 MeV), les données déterminées à partir de tels dosimètres présentent une bonne représentativité de la fluence neutronique rapide subie par la paroi. En outre, la durée de demi-vie du niobium métastable est de 16,1 ans, ce qui autorise une mesure lors de chaque visite décennale du réacteur.

Néanmoins, de tels dosimètres à film niobium ne donnent pas entière satisfaction.

En effet, de tels dosimètres sont quasi-ponctuels, de sorte qu'il est généralement nécessaire d'en répartir un nombre important sur la paroi de cuve afin d'établir une cartographie satisfaisante de la fluence neutronique rapide au niveau de la paroi.

En outre, pour obtenir une information de fluence à partir de tels dosimètres, il est nécessaire de les collecter puis de les préparer pour un traitement par un service spécialisé dans la mesure gamma sur films minces, ce qui impose une préparation longue et minutieuse, et donc coûteuse. Enfin, l'information n'est disponible qu'à chaque visite décennale.

Un but de l'invention est donc de proposer un système de mesure qui permette un suivi cartographique de la distribution spatiale de fluence neutronique rapide intégrée sur une durée prédéterminée, dont l'utilisation et la maintenance soient simples, qui soit robuste, et qui présente des coûts d'exploitation faibles.

US2006/249664 divulgue un container indétériorable.

JP H 09 218270 concerne un système de mesure de neutrons et un système de mesure de radiations.

US 2014/061487 décrit une technique optique pour détecter un historique d'irradiation de neutrons mettant en œuvre un capteur à base Nano cristalline.

**EXPOSÉ DE L'INVENTION**

A cet effet, l'invention a pour objet un système de mesure du type précité selon la revendication 1, comportant au moins un détecteur et un dispositif d'analyse connecté à chaque détecteur,

chaque détecteur comprenant :

- un guide d'onde optique comportant un dopant primaire propre à se transmuter en un dopant secondaire par capture d'un neutron, le dopant secondaire présentant un numéro atomique différent de celui du dopant primaire, le dopant secondaire étant stable et étant moins neutrophage que le dopant primaire ;
- une couche de modération propre à ralentir des neutrons rapides et destinée à être agencée entre le guide d'onde optique et une surface externe d'une paroi d'une cuve du réacteur ;

le dispositif d'analyse étant configuré de façon à, pour chaque détecteur :

- injecter, dans le guide d'onde optique correspondant, une onde d'interrogation secondaire présentant une longueur d'onde secondaire à laquelle le dopant secondaire présente un pic d'absorption, le plus petit écart entre la longueur d'onde secondaire et une longueur d'onde correspondant à un pic d'absorption du dopant primaire étant supérieur ou égal à un premier écart minimal prédéterminé ;
- détecter une onde de réponse secondaire émise par le guide d'onde optique correspondant à partir de l'onde d'interrogation secondaire ;
- calculer, à partir de l'onde de réponse secondaire détectée, une information relative à une concentration de dopant secondaire dans le guide d'onde optique correspondant ; et
- à partir de l'information relative à la concentration de dopant secondaire calculée, et de données de conversion relatives au réacteur nucléaire, déterminer une fluence de neutrons rapides subie par la paroi de la cuve pendant une durée secondaire prédéterminée.

En effet, la mesure de la concentration du dopant secondaire, rapportée à celle du dopant primaire (connue par fabrication), autorise l'obtention, de façon sélective, de l'évolution de la fluence neutronique au cours de l'exploitation du réacteur. Du fait du choix de la longueur d'onde secondaire, l'accès à la concentration du dopant secondaire est accessible par l'intermédiaire de l'onde de réponse secondaire. En outre, grâce à un tel choix, la contribution du dopant primaire à l'onde de réponse secondaire est susceptible d'être aisément soustraite.

En outre, le recours à un dopant primaire de neutrophagie élevée et de descendance stable, de préférence le thulium et/ou l'europium, autorise un fonctionnement continu sur des périodes longues, typiquement soixante ans, sans saturation : aucun remplacement du détecteur durant la vie du réacteur n'est ainsi requis.

En outre, un tel système de mesure est apte à fournir une mesure fiable de la fluence neutronique *in-core* (c'est-à-dire dans la cuve), bien que le détecteur soit placé sur une surface externe de la paroi de la cuve, au niveau de laquelle les conditions d'irradiation sont moins sévères que sur sa surface interne. Ainsi, le déploiement du système de mesure selon l'invention pose moins de difficultés qu'une instrumentation in-*core.*

Par ailleurs, le recours à des guides d'onde autorise une détermination de profils de fluence le long de chacun desdits guides. Un suivi cartographique de la distribution spatiale de fluence neutronique rapide intégrée dans le temps est ainsi accessible, ce qui autorise une étude de vieillissement de l'ensemble de la cuve, et la détection de dissymétries de flux neutronique.

Suivant d'autres aspects avantageux de l'invention, le système de mesure comporte une ou plusieurs des caractéristiques suivantes, prise(s) isolément ou suivant toutes les combinaisons techniquement possibles :

- le dopant primaire est le thulium et/ou l'europium, le dopant secondaire étant l'ytterbium ou le samarium, respectivement ;
- le système de mesure comporte, en outre, une couche d'arrêt de neutrons thermiques destinée à être agencée entre la couche de modération et la surface externe de la paroi de la cuve, la couche d'arrêt de neutrons thermiques étant, de préférence, réalisée en cadmium ;
- le dispositif d'analyse est configuré de façon à, pour chaque détecteur, déterminer, par réflectométrie temporelle ou par réflectométrie fréquentielle, à partir de l'onde de réponse secondaire détectée, un profil d'atténuation du guide d'onde optique correspondant, à la longueur d'onde secondaire, en fonction d'une position le long du guide d'onde optique, le dispositif d'analyse étant configuré pour calculer l'information relative à la concentration de dopant secondaire à partir du profil d'atténuation à la longueur d'onde secondaire déterminé ;
- le dispositif d'analyse est également configuré de façon à, pour chaque détecteur :

  • injecter, dans le guide d'onde optique correspondant, une ou deux ondes d'interrogation secondaires complémentaires optiques présentant chacune une longueur d'onde secondaire complémentaire correspondant à un pied respectif du pic d'absorption associé à la longueur d'onde secondaire ;
  • pour chaque onde d'interrogation secondaire complémentaire, détecter une onde de réponse secondaire complémentaire correspondante émise par le guide d'onde optique correspondant ; et
  • déterminer, par réflectométrie temporelle ou par réflectométrie fréquentielle, à partir de chaque onde de réponse secondaire complémentaire détectée, un profil d'atténuation du guide d'onde optique correspondant, à la longueur d'onde secondaire complémentaire, en fonction d'une position le long du guide d'onde optique,

le dispositif d'analyse étant configuré pour calculer l'information relative à la concentration de dopant secondaire à partir du résultat d'une correction du profil d'atténuation à la longueur d'onde secondaire par le profil d'atténuation associé à chaque longueur d'onde secondaire complémentaire ;

- le dispositif d'analyse est configuré de façon à, pour chaque détecteur, déterminer, à partir de l'onde de réponse secondaire détectée, une quantité totale secondaire de lumière de fluorescence émise par le guide d'onde optique correspondant sur toute sa longueur, dans une bande spectrale de fluorescence secondaire associée au dopant secondaire, l'information relative à la concentration de dopant secondaire dans le guide d'onde optique correspondant étant calculée à partir de la quantité totale secondaire ;

- pour chaque détecteur, le dopant primaire est également propre à se transformer en un dopant tertiaire par irradiation par un photon, le dopant tertiaire présentant le même numéro atomique que le dopant primaire mais une valence différente, le dispositif d'analyse étant également configuré de façon à, pour chaque détecteur :

  • injecter, dans le guide d'onde optique correspondant, une onde d'interrogation tertiaire optique présentant une longueur d'onde tertiaire à laquelle le dopant tertiaire présente un pic d'absorption, la longueur d'onde tertiaire étant telle que le plus petit écart entre la longueur d'onde tertiaire et une longueur d'onde correspondant à un pic d'absorption du dopant primaire ou du dopant secondaire est supérieur ou égal à un troisième écart minimal prédéterminé ;
  • détecter une onde de réponse tertiaire émise par le guide d'onde optique correspondant à partir de l'onde d'interrogation tertiaire ;
  • calculer, à partir de l'onde de réponse tertiaire détectée, une information relative à une concentration de dopant tertiaire ; et
  • déterminer, à partir de l'information relative à la concentration de dopant tertiaire, et des données de conversion, une dose de rayonnement photon absorbée par la paroi de la cuve pendant une durée tertiaire prédéterminée ;

- le dopant tertiaire est le thulium divalent et/ou l'europium divalent, le dopant primaire étant le thulium trivalent ou l'europium trivalent, respectivement ;

- le dispositif d'analyse est configuré de façon à, pour chaque détecteur, déterminer, par réflectométrie temporelle ou par réflectométrie fréquentielle, à partir de l'onde de réponse tertiaire détectée, un profil d'atténuation du guide d'onde optique correspondant, à la longueur d'onde tertiaire, en fonction d'une position le long du guide d'onde optique, le dispositif d'analyse étant configuré pour calculer l'information relative à la concentration de dopant tertiaire à partir du profil d'atténuation à la longueur d'onde tertiaire ;

- le dispositif d'analyse est également configuré de façon à, pour chaque détecteur :

  • injecter, dans le guide d'onde optique correspondant, une ou deux ondes d'interrogation tertiaires complémentaires optiques présentant chacune une longueur d'onde tertiaire complémentaire correspondant à un pied respectif du pic d'absorption associé à la longueur d'onde tertiaire ;
  • pour chaque onde d'interrogation tertiaire complémentaire, détecter une onde de réponse tertiaire complémentaire correspondante émise par le guide d'onde optique ; et
  • déterminer, par réflectométrie temporelle ou par réflectométrie fréquentielle, à partir de chaque onde de réponse tertiaire complémentaire détectée, un profil d'atténuation du guide d'onde optique correspondant, à la longueur d'onde tertiaire complémentaire, en fonction d'une position le long du guide d'onde optique,

  le dispositif d'analyse étant configuré pour calculer l'information relative à la concentration de dopant tertiaire à partir du résultat d'une correction du profil d'atténuation à la longueur d'onde tertiaire par le profil d'atténuation associé à chaque longueur d'onde tertiaire complémentaire ;

- le dispositif d'analyse est configuré de façon à, pour chaque détecteur, déterminer, à partir de l'onde de réponse tertiaire détectée, une quantité totale tertiaire de lumière de fluorescence émise par le guide d'onde optique correspondant sur toute sa longueur, dans une bande spectrale de fluorescence tertiaire associée au dopant tertiaire, l'information relative à la concentration de dopant tertiaire dans le guide d'onde optique correspondant étant calculée à partir de la quantité totale tertiaire.

En outre, l'invention a pour objet une installation selon la revendication 12 comprenant un réacteur nucléaire et un système de mesure tel que défini ci-dessus, chaque détecteur étant disposé sur une surface externe d'une paroi d'une cuve du réacteur nucléaire et, pour chaque détecteur, la couche de modération étant agencée entre le guide d'onde optique correspondant et la surface externe.

En outre, l'invention a pour objet un procédé de mesure de fluence en neutrons rapides pour réacteur nucléaire selon la revendication 13, mettant en œuvre au moins un détecteur comprenant :

- un guide d'onde optique comportant un dopant primaire propre à se transmuter en un dopant secondaire par capture d'un neutron, le dopant secondaire présentant un numéro atomique différent de celui du dopant primaire, le dopant secondaire étant stable et étant moins neutrophage que le dopant primaire ;
- une couche de modération propre à ralentir des neutrons rapides et agencée entre le guide d'onde optique et une surface externe d'une paroi d'une cuve du réacteur,

le procédé de mesure comprenant, pour chaque détecteur, les étapes :

- injection, dans le guide d'onde optique correspondant, une onde d'interrogation secondaire présentant une longueur d'onde secondaire à laquelle le dopant secondaire présente un pic d'absorption, le plus petit écart entre la longueur d'onde secondaire et une longueur d'onde correspondant à un pic d'absorption du dopant primaire étant supérieur ou égal à un écart minimal prédéterminé ;
- détection d'une onde de réponse secondaire émise par le guide d'onde optique correspondant à partir de l'onde d'interrogation secondaire ;
- calcul, à partir de l'onde de réponse secondaire détectée, d'une information relative à une concentration de dopant secondaire dans le guide d'onde optique correspondant ; et
- à partir de l'information relative à la concentration de dopant secondaire calculée, et de données de conversion relatives au réacteur nucléaire, détermination d'une fluence de neutrons rapides subie par la paroi de la cuve pendant une durée secondaire prédéterminée.

## BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :

- la figure 1 est une représentation schématique d'une cuve de réacteur nucléaire équipée d'un système de mesure selon l'invention ;
- la figure 2 illustre plus en détail la cuve et le système de mesure de la figure 1 ;
- la figure 3 est un graphe illustrant l'évolution, en fonction du temps, d'un taux massique des éléments thulium et ytterbium dans un détecteur du système de mesure des figures 1 et 2 ;
- la figure 4 est un graphe illustrant l'évolution, en fonction du temps, d'un taux massique des éléments europium et samarium dans un détecteur du système de mesure des figures 1 et 2 ; et
- la figure 5 est un graphe illustrant l'évolution, en fonction du temps, d'une puissance d'un signal de réponse reçu depuis un détecteur du système de mesure des figures 1 et 2.

## DESCRIPTION DÉTAILLÉE

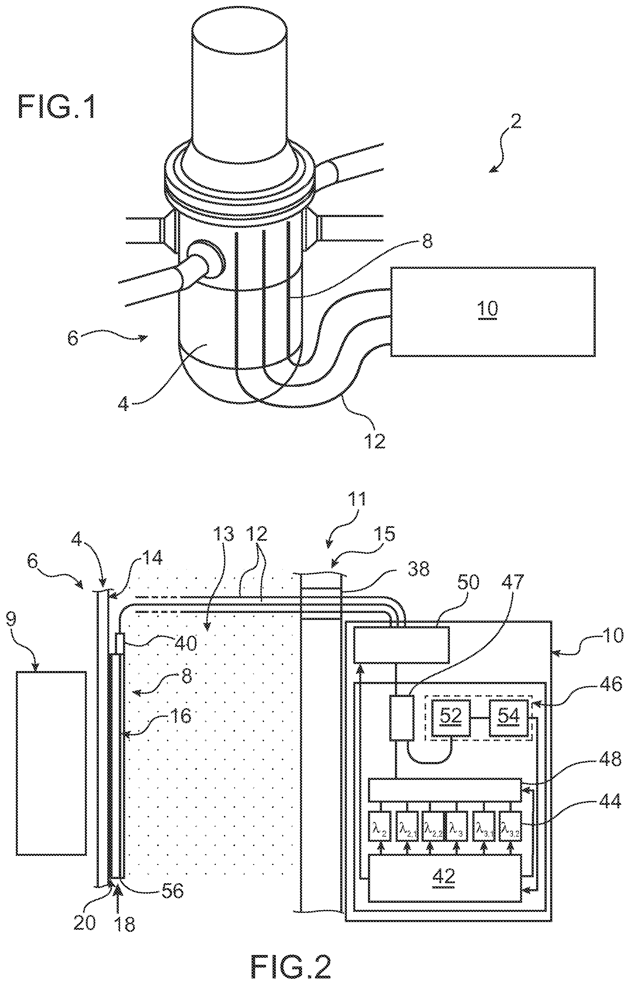

Un système de mesure 2 selon l'invention est illustré par les figures 1 et 2.

Le système de mesure 2 est destiné à mesurer une fluence neutronique, et plus précisément une fluence neutronique rapide, subie par une paroi 4 d'une cuve 6 d'un réacteur nucléaire (non représenté). La cuve 6 abrite le cœur 9 du réacteur.

De façon classique, la cuve 6 est logée dans un bâtiment réacteur 11, une enveloppe 13 en matériau calorifuge étant agencée entre la paroi 4 de la cuve 6 et une cloison 15 du bâtiment réacteur 11.

Le système de mesure 2 comprend au moins un détecteur 8 et un dispositif d'analyse 10 relié à chaque détecteur 8. En particulier, le dispositif d'analyse 10 est relié à chaque détecteur 8 au moyen d'une fibre de déport 12 correspondante.

Comme illustré par ces figures, chaque détecteur 8 est destiné à être agencé sur une surface externe 14 de la paroi 4, et est configuré pour présenter une réponse qui est fonction de la fluence de neutrons rapides subie par la paroi 4 au voisinage du détecteur 8.

En outre, le dispositif d'analyse 10, de préférence disposé à l'extérieur du bâtiment réacteur 11, est configuré pour déterminer ladite fluence de neutrons rapides sur une durée secondaire prédéterminé, à partir de la réponse de chaque détecteur 8.

Détecteur

Le détecteur 8 comprend un guide d'onde optique 16, également appelé « guide d'onde », une couche de modération 18 et, de préférence, une couche 20 d'arrêt de neutrons thermiques.

*Guide d'onde*

Le guide d'onde 16 est propre à transporter et guider de la lumière présentant une longueur d'onde appartenant à une plage de longueurs d'onde prédéterminée, de préférence, une plage de longueurs d'onde appartenant au moins partiellement au domaine visible et/ou au domaine proche infrarouge.

En particulier, le guide d'onde 16 est une fibre de guidage de lumière. Par exemple, le guide d'onde 16 est une fibre optique en silice ou une fibre cristalline, de préférence une fibre cristalline en oxyde d'aluminium $Al_2O_3$ (également appelé « saphir »), en grenat d'yttrium et d'aluminium (communément appelée « YAG »), ou encore en fluorure de calcium $CaF_2$. De telles fibres présentent une excellente tenue au rayonnement, ce qui est avantageux pour l'application envisagée.

De préférence, et comme cela apparaît sur la figure 1, le guide d'onde 16 présente une longueur qui est du même ordre de grandeur qu'une étendue spatiale de la cuve 6, de préférence entre 0,5 m et 20 m, par exemple entre 1 m et 10 m. Ceci autorise la détermination d'un profil de fluence neutronique (ou d'une fluence neutronique totale) sur une zone étendue de la paroi 4, ce qui augmente la significativité de la mesure.

Afin de réduire une réflexion à une extrémité distale 56 du guide d'onde 16, distincte de l'extrémité raccordée à la fibre de déport 12 correspondante, une adaptation d'indice au niveau de ladite extrémité distale 56 est avantageusement réalisée. Pour ce faire, un liquide d'indice dont l'indice optique est identique à celui du guide d'onde 16 peut être déposé à ladite extrémité distale, ou bien cette extrémité distale peut être clivée ou polie en biais (angle typique de 8 °).

Le guide d'onde 16 comporte un dopant primaire propre à se transmuter en un dopant secondaire par capture d'un neutron thermique. Une telle réaction de transmutation est classiquement appelée « réaction (n, y) ».

Le dopant secondaire est stable et présente un numéro atomique différent de celui du dopant primaire. En outre, le dopant secondaire est moins neutrophage que le dopant primaire.

Par « dopant secondaire moins neutrophage que le dopant primaire », il est entendu, au sens de la présente invention, que le dopant secondaire présente une section efficace de capture de neutrons thermiques plus petite que celle du dopant primaire pour des neutrons d'énergie donnée, en particulier pour des neutrons thermiques, avantageusement au moins cinq fois plus petite, de préférence au moins dix fois plus petite, par exemple au moins vingt fois plus petite.

Une telle caractéristique est particulièrement avantageuse, dans la mesure où, au premier ordre, la quantité de dopant secondaire dans le guide d'onde 16 dépend uniquement de la transmutation du dopant primaire par capture de neutrons, et en constitue un indicateur fiable.

En effet, au cours du fonctionnement du système de mesure 2, le dopant primaire se transmute progressivement en dopant secondaire, sous l'effet des neutrons en provenance du cœur 9 et traversant la paroi 4 de la cuve 6. Le dopant secondaire ainsi obtenu est stable, de sorte qu'il ne se transforme pas spontanément, par réaction nucléaire, en l'un de ses isotopes ou en un autre élément chimique. En outre, le dopant secondaire étant moins neutrophage que le dopant primaire, la probabilité d'une transmutation, par capture d'un neutron, du dopant secondaire (qui est lui-même issu d'une réaction antérieure du dopant primaire) est très faible. En outre, la concentration en dopant secondaire étant faible (de l'ordre de la partie par million, ppm), la concentration en produit de la réduction, sous l'effet de photons provenant du cœur 9, du dopant secondaire est négligée.

Comme cela sera décrit ultérieurement, par interrogation de chaque détecteur 8, une information relative à la concentration de dopant secondaire est obtenue, cette valeur étant indicative d'une fluence neutronique thermique vue par le détecteur 8 au cours de son utilisation. Par la mise en œuvre de données de conversion prédéterminées relatives au réacteur, une fluence neutronique rapide subie par la paroi 4 de la cuve 6 est ainsi susceptible d'être obtenue.

Avantageusement, le dopant primaire est le thulium (noté Tm) et/ou l'europium (noté Eu).

Le dopant secondaire correspondant au thulium est l'ytterbium (noté Yb). En outre, le dopant secondaire associé à l'europium est le samarium (noté Sm).

Le thulium présente un seul isotope $^{169}$Tm, dont la transmutation aboutit à l'ytterbium 170 $^{170}$Yb, stable.

Le thulium présente une section efficace de capture de neutrons de 112 barn à 25 meV, et 7,4 barn à 1 MeV. La section efficace de capture de neutrons thermiques de l'ytterbium est un ordre de grandeur plus faible que celle du thulium.

L'europium présente deux isotopes naturels, $^{151}$Eu et $^{153}$Eu, en proportions égales. La transmutation de l'europium conduit à la formation des isotopes $^{152}$Sm et $^{148}$Sm, dont les sections efficaces de capture de neutrons thermiques sont de deux à trois ordres de grandeur en dessous de l'europium.

Les sections efficaces de capture de neutrons à 25 meV de $^{151}$Eu et de $^{153}$Eu valent respectivement 9189 barn et 367 barn, mais ne sont que d'environ 7 barn à 1 MeV.

De telles espèces chimiques sont avantageuses, dans la mesure où, au regard des flux de neutrons *ex-core* usuels, la transmutation du thulium et de l'europium ne modifie pas sensiblement leur concentration sur des durées de plusieurs décennies.

A titre d'illustration, dans une fibre optique en silice ou une fibre en saphir, le thulium est présent sous la forme d'un oxyde $Tm_2O_3$, tandis que l'europium est présent sous la forme d'un oxyde $Eu_2O_3$.

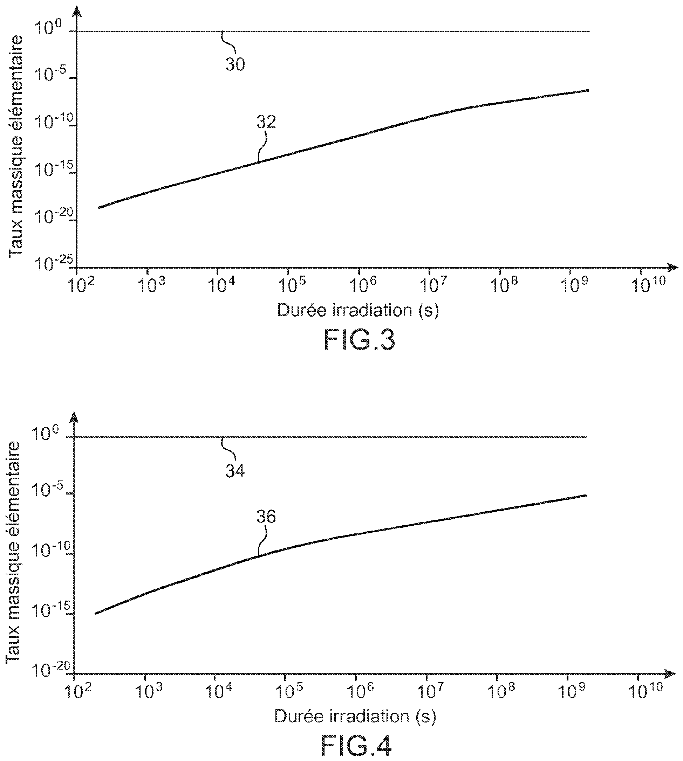

A titre d'exemple, sur la figure 3 est illustrée l'évolution, en fonction du temps, d'un taux massique des éléments thulium (courbe 30) et ytterbium (courbe 32) dans un détecteur 8 dopé au thulium et exposé à un flux de neutrons rapides thermalisés valant $3.10^6$ n.cm$^{-2}$.s$^{-1}$. Un tel flux neutronique est typiquement celui régnant au niveau de la surface externe de la paroi de la cuve d'un réacteur PWR 1300, et dont la couche de modération 18 présente une épaisseur d'environ 10 cm.

Comme cela apparaît sur cette figure, le taux massique de l'ytterbium augmente graduellement au cours du temps du fait de la transmutation du thulium, avec un taux estimé à environ 3,6 ppb (partie par milliard) à l'issue d'une durée d'utilisation de 3 ans ($9,46.10^7$ s), et environ 72 ppb à l'issue d'une durée d'utilisation de 60 ans ($1,89.10^9$ s), pour une concentration en dopant primaire de 8%. En conséquence, le taux massique du thulium est, au premier ordre, constant sur toute la durée de vie du détecteur 8.

De tels taux sont compatibles avec une mesure au moyen du système de mesure selon l'invention.

Selon un autre exemple, sur la figure 4 est illustrée l'évolution, en fonction du temps, d'un taux massique des éléments europium (courbe 34) et samarium (courbe 36) dans un détecteur 8 dopé à l'europium et exposé au même flux de neutrons que dans l'exemple de la figure 3.

Il ressort de cette figure que le taux massique du samarium augmente graduellement au cours du temps du fait de la transmutation de l'europium, avec un taux estimé à environ 40 ppb à l'issue d'une durée d'utilisation de 3 ans, et environ 800 ppb à l'issue d'une durée d'utilisation de 60 ans, pour une concentration en dopant primaire de 8%. Dans ce cas, le taux massique d'europium est, au premier ordre, constant sur toute la durée de vie du détecteur 8.

De tels taux sont compatibles avec une mesure au moyen du système de mesure selon l'invention.

Avantageusement, le dopant primaire est également propre à se transformer en un dopant tertiaire par irradiation par un photon, notamment un photon de haute énergie (typiquement supérieure au kiloélectronvolt), par exemple un photon $\gamma$. Le dopant tertiaire présente le même numéro atomique que le dopant primaire, mais une valence différente.

Ceci est particulièrement avantageux, dans la mesure où, au premier ordre, la quantité de dopant tertiaire dans le guide d'onde 16 dépend uniquement de la réduction du dopant primaire par absorption de photons de haute énergie. Il en résulte que la quantité de dopant tertiaire dans le guide d'onde 16 constitue un indicateur de la dose de rayonnement photon absorbée.

En effet, au cours du fonctionnement du système de mesure 2, le dopant primaire subit progressivement, sous l'effet des photons (photons $\gamma$ notamment) issus du cœur 9 et traversant la paroi 4 de la cuve 6, une réduction dont le produit est le dopant tertiaire. La concentration en produit de la transmutation ultérieure du dopant tertiaire est négligée, dans la mesure où l'apparition de ce produit requiert la mise en œuvre, depuis le dopant primaire, de deux réactions successives (transmutation, puis réduction), chacune de faible probabilité.

Or, comme cela sera décrit ultérieurement, par interrogation de chaque détecteur 8, une information relative à la concentration de dopant tertiaire est obtenue, cette valeur étant indicative d'une dose de rayonnement photon absorbée (c'est-à-dire une dose de rayonnement absorbée due à des photons) par le détecteur 8 au cours d'une durée tertiaire prédéterminée. Par la mise en œuvre des données de conversion prédéterminées, une dose absorbée par la paroi 4 de la cuve 6 est ainsi susceptible d'être obtenue. Ceci résulte du fait que le dopant primaire et le dopant tertiaire présentent des pics d'absorption de lumière localisés à des longueurs d'onde différentes, leurs valences étant différentes.

Le dopant tertiaire correspondant au thulium dans son état trivalent est le thulium divalent. En outre, le dopant tertiaire associé à l'europium dans son état trivalent est l'europium divalent.

De préférence, le dopage, par le dopant primaire, du guide d'onde 16 avant la première mise en œuvre du système de mesure 2 est de l'ordre de quelques pourcents, avantageusement compris entre 1% et 25% molaire, par exemple environ 8% molaire.

D'une façon générale, et comme cela sera décrit ultérieurement, un guide d'onde 16 donné génère une onde de réponse lors de la réception d'une onde d'interrogation.

Les expressions génériques « onde d'interrogation » et « onde de réponse » seront utilisées dans la description du système de mesure 2, à moins que la description de certaines caractéristiques n'appelle l'utilisation d'expressions plus précises.

Plus spécifiquement, lors de la réception de l'onde d'interrogation secondaire (décrites ultérieurement), le guide d'onde 16 génère une onde de réponse secondaire.

Lors de la réception de l'onde d'interrogation tertiaire (décrites ultérieurement), le guide d'onde 16 génère une onde de réponse tertiaire.

Lors de la réception de la première, respectivement la deuxième, onde d'interrogation secondaire complémentaire (décrites ultérieurement), le guide d'onde 16 génère une première, respectivement une deuxième, onde de réponse secondaire complémentaire.

Lors de la réception de la première, respectivement la deuxième, onde d'interrogation tertiaire complémentaire (décrites ultérieurement), le guide d'onde 16 génère une première, respectivement une deuxième, onde de réponse tertiaire complémentaire.

*Couche de modération*

La couche de modération 18, représentée sur la figure 2, est configurée pour ralentir des neutrons rapides, en particulier pour les thermaliser. En d'autres termes, la couche de modération 18 est configurée pour convertir au moins une partie des neutrons rapides incidents en neutrons thermiques, c'est-à-dire présentant une énergie inférieure ou égale à 1 eV (électronvolt).

Comme cela apparaît sur la figure 2, la couche de modération 18 est destinée à être agencée entre le guide d'onde 16 et la surface externe 14 de la paroi 4.

Grâce à la couche de modération 18, les neutrons rapides issus du cœur 9 et traversant la paroi 4 sont ralentis, ce qui autorise leur capture par le dopant primaire (dont la section efficace de capture de neutrons est généralement bien plus élevée pour les neutrons thermiques que pour les neutrons rapides), donc sa transmutation en dopant secondaire.

La couche de modération 18 est, avantageusement, réalisée dans un matériau riche en hydrogène, par exemple le polyéthylène ou le polypropylène. De tels polymères présentent une bonne tenue pour des températures allant jusqu'à 140°C et des doses allant jusqu'à 1 MGy (mégagray) environ, soit typiquement la température, respectivement la dose intégrée sur 60 ans, au niveau de la surface externe 14 de la paroi 4.

La couche de modération 18 présente une épaisseur comprise, de préférence, entre 50 mm (millimètre) et 150 mm, par exemple environ 100 mm pour un réacteur PWR 1300.

Une telle épaisseur correspond à un bon compromis entre le flux (à maximiser) des neutrons thermiques correspondant à des neutrons rapides ayant été thermalisés, et le flux de neutrons thermiques directement issus du cœur 9, ces derniers n'étant pas désirables car ils sont également susceptibles d'être capturés par le dopant primaire, ce qui conduirait à une formation de dopant secondaire non représentative de la fluence neutronique rapide, et diminuerait donc la précision et la fiabilité du système de mesure 2.

Par exemple, pour un réacteur PWR 1300, une couche de modération 18 d'épaisseur 100 mm conduit, en sortie de ladite couche de modération 18, à un rapport favorable voisin de 10 entre le flux de neutrons thermiques issus de neutrons rapides et le flux de neutrons thermiques directement issus du cœur 9, ce qui est satisfaisant du point de vue de l'application envisagée.

Un autre effet avantageux de la couche de modération 18 réside dans le fait que le flux de neutrons rapides impactant le guide d'onde 16 (et les fibres de déport 12) est considérablement réduit par rapport à une situation où une telle couche de modération serait absente. Il en résulte une diminution significative du phénomène d'atténuation induite par les radiations (ou *« radiation-induced attenuation »*, en anglais), qui est préjudiciable du point de vue de la transmission du guide d'onde 16 et des fibres de déport 12.

*Couche d'arrêt de neutrons*

La couche d'arrêt 20 est configurée pour arrêter, au moins en partie, les neutrons issus du cœur présentant une énergie inférieure à un seuil d'énergie prédéterminée, en particulier les neutrons thermiques.

La couche d'arrêt 20 est destinée à être agencée entre la couche de modération 18 et la surface externe 14 de la paroi 4 de la cuve 6, comme cela apparaît sur la figure 2.

Grâce à une telle couche d'arrêt 20, le flux de neutrons thermiques parvenant à la couche de modération 18, et donc au guide d'onde 16, est réduit. Il en résulte que la mesure réalisée par le système de mesure 2 est plus fiable.

De préférence, la couche d'arrêt 20 est réalisée en cadmium. Dans ce cas, la couche d'arrêt 20 présente avantageusement une épaisseur comprise entre 0,6 mm et 1,6 mm, par exemple environ 1 mm, l'atténuation du flux de neutrons thermiques par le cadmium ne variant pas de façon significative sur cette plage d'épaisseurs.

Fibres de déport

Comme illustré par les figures 1 et 2, chaque fibre de déport 12 relie un détecteur 8 correspondant au dispositif d'analyse 10 pour permettre la circulation de lumière entre eux.

Plus précisément, chaque fibre de déport 12 s'étend entre le détecteur 8 correspondant, au guide d'onde 16 duquel elle est raccordée au moyen d'une connexion 40, et une traversée optique 38 *(« optical penetration assembly »* en anglais) agencée au niveau de la cloison 15 du bâtiment réacteur 11. Ainsi, chaque fibre de déport 12 traverse l'enveloppe 13 de matériau calorifuge.

La traversée optique 38 est configurée pour transmettre de la lumière à travers la cloison 15 tout en préservant l'étanchéité du bâtiment réacteur 11.

De préférence, chaque fibre de déport 12 comprend un cœur, en particulier en silice pure (*« pure silica-core fiber »* en anglais), et une gaine agencée autour du cœur, la gaine étant dopée par du fluor pour conférer à la fibre de déport 12 une plus grande résistance aux radiations.

En variante, le cœur de la fibre de déport 12 est également dopé par du fluor afin d'accroître davantage la tenue aux radiations. Dans ce cas, la concentration en fluor dans le cœur de la fibre de déport 12 est inférieure à celle dans la gaine afin de garantir les propriétés de guidage de la fibre de déport 12. En effet, l'indice de la silice décroît avec le dopage en fluor.

Dispositif d'analyse

Le dispositif d'analyse 10 est configuré pour émettre, à destination de chaque détecteur 8, une onde d'interrogation pour amener ledit détecteur 8 à émettre une onde de réponse correspondante. Le dispositif d'analyse 10 est également configuré pour détecter l'onde de réponse émise par chaque détecteur 8 et pour déterminer des caractéristiques relatives au réacteur, par exemple la fluence de neutrons rapides subie par la paroi 4 de la cuve 6 pendant la durée secondaire prédéterminée, à partir de chaque onde de réponse secondaire reçue.

Le dispositif d'analyse 10 comprend un organe de commande 42, au moins une source 44 de lumière et un étage de détection 46.

Le dispositif d'analyse 10 comprend également un organe d'acheminement 47, configuré pour acheminer de la lumière depuis les sources 44 vers la traversée optique 38, et depuis la traversée optique 38 vers l'étage de détection 46. L'organe d'acheminement 47 est, par exemple, un coupleur optique ou un circulateur optique.

De préférence, dans le cas où le dispositif d'analyse 10 comprend une pluralité de sources 44, le dispositif d'analyse comporte également un commutateur interne 48, agencé entre une entrée de l'organe d'acheminement 47 et une sortie de chaque source 44. Le commutateur interne 48 est configuré pour acheminer, de préférence sélectivement, de la lumière depuis une source 44 vers l'organe d'acheminement 47, en fonction d'une commande correspondante générée par l'organe de commande 42. Ceci autorise l'envoi d'une onde d'interrogation depuis une source 44 spécifique à destination des détecteurs 8.

De préférence encore, dans le cas où le système de mesure 2 comprend une pluralité de détecteurs 8, le dispositif d'analyse comporte également un commutateur externe 50, agencé entre une entrée/sortie de l'organe d'acheminement 47 et la traversée optique 38. Le commutateur externe 50 est configuré pour permettre la circulation sélective de lumière entre l'organe d'acheminement 47 et un détecteur 8 donné, en fonction d'une commande correspondante issue de l'organe de commande 42. Ceci autorise l'envoi d'une onde d'interrogation à destination d'un détecteur 8 spécifique.

*Sources*

Chaque source 44 est configurée pour générer une onde optique, de préférence une onde optique dont la longueur d'onde appartient au domaine visible ou infrarouge proche.

Plus précisément, pour chaque détecteur 8, le dispositif d'analyse 10 comprend une source 44 associée, dite « source secondaire », configurée pour générer une onde d'interrogation secondaire présentant une longueur d'onde secondaire. La longueur d'onde secondaire est une longueur d'onde à laquelle le dopant secondaire associé au détecteur 8 présente un pic d'absorption. En outre, la longueur d'onde secondaire est telle que le plus petit écart entre la longueur d'onde secondaire et une longueur d'onde correspondant à un pic d'absorption du dopant primaire est supérieur ou égal à un premier écart minimal prédéterminé.

De préférence, le premier écart minimal prédéterminé est supérieur ou égal à 100 nm, avantageusement supérieur ou égal à 150 nm.

A titre d'exemple, si le dopant primaire est le thulium, qui, dans la silice, présente un pic d'absorption à 790 nm et un pic d'absorption autour de 1180 nm, la longueur d'onde secondaire (valant 920 nm ou 982 nm, comme cela sera décrit ultérieurement) est distante d'au moins 130 nm du pic d'absorption le plus proche du dopant primaire.

Si le dopant primaire est également apte à se transformer en le dopant tertiaire, alors la longueur d'onde secondaire est telle que le plus petit écart entre la longueur d'onde secondaire et une longueur d'onde correspondant à un pic d'absorption du dopant tertiaire est supérieur ou égal à un deuxième écart minimal prédéterminé.

A titre d'exemple, dans le cas où le dopant secondaire est l'ytterbium :

- si le guide d'onde 16 est une fibre optique en silice $SiO_2$ ou une fibre cristalline en fluorure de calcium $CaF_2$, la longueur d'onde secondaire vaut 920 nm ou 982 nm ;
- si le guide d'onde 16 est une fibre YAG, la longueur d'onde secondaire vaut 941 nm ou 970 nm.

Selon un autre exemple, dans le cas où le dopant secondaire est le samarium :

- si le guide d'onde 16 est une fibre optique en silice $SiO_2$ ou une fibre cristalline YAG, la longueur d'onde secondaire vaut 1030 nm, 1180 nm, 1290 nm ou 1390 nm ;
- si le guide d'onde 16 est une fibre cristalline en fluorure de calcium $CaF_2$, la longueur d'onde secondaire vaut 1080 nm, 1230 nm, 1400 nm ou 1500 nm.

Avantageusement, pour un détecteur 8 donné, le dispositif d'analyse 10 comprend également une source 44 associée, dite « première source secondaire complémentaire », configurée pour générer une première onde d'interrogation secondaire complémentaire présentant une première longueur d'onde secondaire complémentaire. La première longueur d'onde secondaire complémentaire correspond à un pied du pic d'absorption associé à la longueur d'onde secondaire. En particulier, l'écart entre la première longueur d'onde secondaire complémentaire et la longueur d'onde secondaire est de l'ordre de la dizaine de nanomètres, par exemple compris entre environ 10 nm et environ 50 nm, suivant la largeur (par exemple la largeur à mi-hauteur) du pic d'absorption associé à la longueur d'onde secondaire.

Avantageusement encore, pour un détecteur 8 donné, le dispositif d'analyse 10 comprend également une source 44 associée, dite « deuxième source secondaire complémentaire », configurée pour générer une deuxième onde d'interrogation secondaire complémentaire présentant une deuxième longueur d'onde secondaire complémentaire. La deuxième longueur d'onde secondaire complémentaire correspond à un pied du pic d'absorption associé à la longueur d'onde secondaire qui est distinct du pied auquel est associée la première longueur d'onde secondaire complémentaire.

En particulier, l'écart entre la deuxième longueur d'onde secondaire complémentaire et la longueur d'onde secondaire est de l'ordre de la dizaine de nanomètres, par exemple compris entre environ 10 nm et environ 50 nm, suivant la largeur (par exemple la largeur à mi-hauteur) du pic d'absorption associé à la longueur d'onde secondaire. Par exemple, la première longueur d'onde secondaire complémentaire et la deuxième longueur d'onde secondaire complémentaire sont équidistantes de la longueur d'onde secondaire.

Il en résulte que, pour la mesure de fluence, et quel que soit le dopant secondaire considéré, le système de mesure comprend avantageusement trois sources 44 : une source secondaire (notée $\lambda_2$ sur la figure 2), une première source secondaire complémentaire (notée $\lambda_{2,1}$) et une deuxième source secondaire complémentaire (notée $\lambda_{2,2}$).

De préférence, pour chaque détecteur 8, le dispositif d'analyse 10 comprend également une source 44 associée, dite « source tertiaire », configurée pour générer une onde d'interrogation tertiaire optique présentant une longueur d'onde tertiaire. La longueur d'onde tertiaire est une longueur d'onde à laquelle le dopant tertiaire associé au détecteur 8 présente un pic d'absorption. En outre, la longueur d'onde tertiaire est telle que le plus petit écart entre la longueur d'onde tertiaire et une longueur d'onde correspondant à un pic d'absorption du dopant primaire ou du dopant secondaire est supérieur ou égal à un troisième écart minimal prédéterminé.

A titre d'exemple, dans le cas où le dopant tertiaire est le thulium divalent, si le guide d'onde 16 est une fibre optique en silice $SiO_2$ ou une fibre cristalline (par exemple, fibre YAG ou fibre cristalline en fluorure de calcium $CaF_2$), la longueur d'onde tertiaire vaut 1066 nm.

Dans le cas où le dopant tertiaire est l'europium divalent, le dispositif d'analyse 10 ne comprend, de préférence, pas de source 44 associée, dans la mesure où le pic d'absorption à 350 nm de l'europium divalent se trouve en dehors des domaines visible et proche infrarouge envisagés.

Avantageusement, pour un détecteur 8 donné, le dispositif d'analyse 10 comprend également une source 44 associée, dite « première source tertiaire complémentaire », configurée pour générer une première onde d'interrogation tertiaire complémentaire présentant une première longueur d'onde tertiaire complémentaire. La première longueur d'onde tertiaire complémentaire correspond à un pied du pic d'absorption associé à la longueur d'onde tertiaire. En particulier, l'écart entre la première longueur d'onde tertiaire complémentaire et la longueur d'onde tertiaire est de l'ordre de la dizaine de nanomètres, par exemple compris entre environ 10 nm et environ 50 nm, suivant la largeur (par exemple la largeur à mi-hauteur) du pic d'absorption associé à la longueur d'onde tertiaire.

Avantageusement encore, pour un détecteur 8 donné, le dispositif d'analyse 10 comprend également une source 44 associée, dite « deuxième source tertiaire complémentaire », configurée pour générer une deuxième onde d'interrogation tertiaire complémentaire présentant une deuxième longueur d'onde tertiaire complémentaire. La deuxième longueur d'onde tertiaire complémentaire correspond à un pied du pic d'absorption associé à la longueur d'onde tertiaire qui est distinct du pied auquel est associée la première longueur d'onde tertiaire complémentaire. En particulier, l'écart entre la deuxième longueur d'onde tertiaire complémentaire et la longueur d'onde tertiaire est de l'ordre de la dizaine de nanomètres, par exemple compris entre environ 10 nm et environ 50 nm, suivant la largeur (par exemple la largeur à mi-hauteur) du pic d'absorption associé à la longueur d'onde tertiaire. Par exemple, la première longueur d'onde tertiaire complémentaire et la deuxième longueur d'onde tertiaire complémentaire sont équidistantes de la longueur d'onde tertiaire.

Il en résulte que, pour la mesure de dose de rayonnement photon, le système de mesure 2 :

- comprend, avantageusement, une source tertiaire (notée $\lambda_3$ sur la figure 2), une première source tertiaire complémentaire (notée $\lambda_{3,1}$) et une deuxième source tertiaire complémentaire (notée $\lambda_{3,2}$) si le dopant primaire est le thulium ;
- ne comprend pas, de préférence, de source tertiaire, de première ou de deuxième source tertiaire complémentaire si le dopant primaire est l'europium.

*Etage de détection*

L'étage de détection 46 est configuré pour générer un signal de détection représentatif de la détection de l'onde de réponse issue de chaque détecteur 8.

L'étage de détection 46 comporte un photodétecteur 52 et un organe d'acquisition 54 relié en sortie du photodétecteur 52.

Le photodétecteur 52 est connecté à une sortie de l'organe d'acheminement 47 pour recevoir l'onde de réponse issue de chaque détecteur 8.

Le photodétecteur 52 est configuré pour détecter l'onde de réponse, et pour délivrer un signal électrique représentatif de ladite détection.

Par exemple, le photodétecteur 52 est une photodiode PIN à bas bruit, une photodiode à avalanche, ou encore une caméra CCD. De préférence, le photodétecteur 52 est refroidi, par exemple par effet thermoélectrique (effet Peltier), dans le but de réduire son niveau de bruit.

L'organe d'acquisition 54 est configuré pour générer le signal de détection à partir du signal électrique délivré par le photodétecteur 52. Par exemple, l'organe d'acquisition 54 est configuré pour amplifier et numériser le signal électrique délivré par le photodétecteur 52 afin de générer le signal de détection.

Le signal de détection est représentatif des caractéristiques de l'onde de réponse.

Le photodétecteur 52 et l'organe d'acquisition 54 sont connus et ne seront pas décrits davantage.

*Organe de commande*

L'organe de commande est configuré pour stocker des données de conversion prédéterminées. De telles données de conversion comprennent notamment un coefficient de conversion neutronique (décrit ultérieurement). De préférence, les données de conversion comprennent également un coefficient de conversion photonique (décrit ultérieurement), ainsi qu'un profil de concentration initiale de chaque guide d'onde 16 en dopant primaire (ou encore une concentration moyenne initiale en dopant primaire), ou encore un profil de concentration de chaque guide d'onde 16 en dopant primaire en fonction d'une position le long dudit guide d'onde 16.

Par exemple, le profil de concentration en dopant primaire est mesuré en déplaçant le guide d'onde 16 longitudinalement et en le sondant transversalement. Une telle mesure est souhaitable, la concentration étant généralement inhomogène dans le guide d'onde 16 après sa fabrication.

L'organe de commande 42 est configuré pour commander l'émission de chaque source 44 afin de générer l'onde d'interrogation correspondante, par exemple au moyen d'une interface électronique de déclenchement des émissions des sources 44. Une telle interface électronique de déclenchement fournit avantageusement une référence temporelle pour l'acquisition du signal de détection.

En outre, l'organe de commande 42 est, avantageusement, configuré pour commander le commutateur interne 48 et le commutateur externe 50 pour acheminer l'onde d'interrogation de façon sélective depuis une source 44 donnée vers un détecteur 8 donné.

L'organe de commande 42 est également configuré pour acquérir le signal de détection délivré par l'étage de détection pour ladite source 44 et ledit détecteur 8, le signal de détection délivré par l'étage de détection 46, par exemple au moyen d'une carte d'acquisition haute cadence (100 méga-échantillons par seconde, voire plus) et grande dynamique (16 bits ou plus).

L'organe de commande 42 est également configuré pour, à partir du signal de détection acquis, calculer une information relative à une concentration de dopant secondaire ou tertiaire dans le guide d'onde optique 16 correspondant, par exemple un profil de concentration.

En particulier, l'organe de commande 42 est configuré de façon à, pour chaque détecteur 8, déterminer un profil d'atténuation du guide d'onde 16 correspondant, à la longueur d'onde de l'onde d'interrogation, en fonction d'une position le long du guide d'onde 16, à partir du signal de détection correspondant à l'onde de réponse reçue, et par réflectométrie optique temporelle (« *optical time-domain reflectometry* » en anglais), et à calculer l'information relative à la concentration du dopant secondaire ou tertiaire à partir du profil d'atténuation déterminé. Dans le cas d'une détection par réflectométrie optique temporelle, l'organe de commande 42 est configuré pour commander les sources 44 afin qu'elles émettent de la lumière de façon impulsionnelle. Alors, chaque impulsion lumineuse forme l'onde d'interrogation, dont l'étendue spatiale conditionne la résolution susceptible d'être atteinte.

Au cours de sa propagation depuis l'organe d'acheminement 47 vers l'extrémité distale 56 du guide d'onde 16, une partie de l'onde d'interrogation est diffusée, notamment rétrodiffusée, par diffusion Rayleigh (« *Rayleigh scattering* » en anglais). En outre, une partie de l'onde d'interrogation est absorbée, en particulier absorbée par le dopant secondaire ou tertiaire (en fonction de la longueur d'onde de l'onde d'interrogation) dans le guide d'onde 16, ou encore du fait de l'atténuation induite par les radiations dans le guide d'onde 16 et/ou la fibre de déport 12. De ce fait, l'onde d'interrogation voit sa puissance optique diminuer au cours de sa propagation.

L'atténuation induite par les radiations dans la fibre de déport 12 a généralement un impact sur le rapport signal sur bruit de la mesure, tandis que l'atténuation induite par les radiations dans le guide d'onde 16 est susceptible d'être corrigée au moyen d'une correction décrite ultérieurement.

La partie de l'onde d'interrogation qui est rétrodiffusée constitue l'onde de réponse. En particulier, l'onde de réponse correspond à la partie de l'onde d'interrogation qui est rétrodiffusée par un tronçon du chemin optique emprunté par l'onde d'interrogation, par exemple un tronçon de fibre de déport 12 ou de guide d'onde 16, ledit tronçon étant spatialement compris entre un début et une fin de l'impulsion lumineuse. Dans le cas de la réflectométrie optique temporelle, la résolution spatiale susceptible d'être atteinte lors de la détermination du profil d'atténuation est fonction de la longueur des impulsions, c'est-à-dire de la longueur dudit tronçon. Par exemple, pour un guide d'onde 16 consistant en une fibre optique en silice, et pour des impulsions lumineuses d'une nanoseconde de largeur temporelle, la résolution atteinte est d'environ 10 cm.

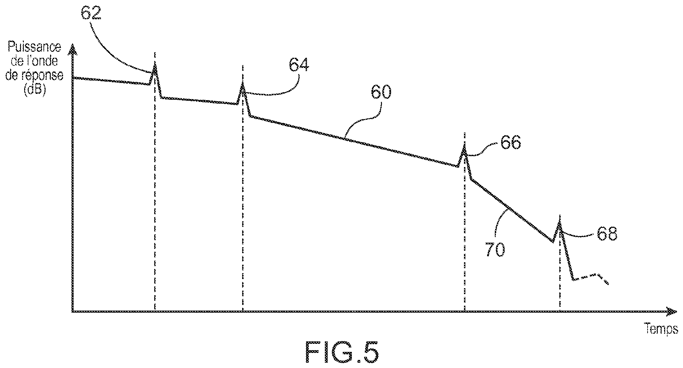

Un exemple de l'évolution, en fonction du temps, de la puissance de l'onde de réponse parvenant au photodétecteur 52 depuis le détecteur 8, après l'injection d'une telle impulsion dans l'organe d'acheminement 47, est illustré par la courbe 60 de la figure 5. Une telle courbe correspond au cas où l'onde d'interrogation est émise par la source secondaire ou la source tertiaire.

De façon classique, le signal de détection délivré par l'étage de détection 46 est représentatif d'une telle évolution.

Comme cela apparaît sur cette figure, le profil de puissance de l'onde de réponse est globalement décroissant. Comme indiqué précédemment, ceci résulte du fait que l'onde d'interrogation, au cours de sa propagation, voit sa puissance optique diminuer du fait de la diffusion Rayleigh, mais également de l'absorption et des imperfections de couplage entre composants optiques successifs.

En outre, un tel profil de puissance comporte des pics, correspondant à des réflexions au niveau du commutateur externe 50 (pic 62), de la traversée optique 38 (pic 64) de la connexion 40 (pic 66) et de l'extrémité du guide d'onde 16 (pic 68).

Sur cette courbe 60, le segment 70, compris entre les pics 66 et 68, correspond à la partie de l'onde de réponse qui est due au guide d'onde 16. La longueur d'onde de l'onde d'interrogation correspondant à un pic d'absorption du dopant secondaire (respectivement tertiaire), la pente du segment 70 dépend de la concentration, en chaque point du guide d'onde 16, en dopant secondaire (respectivement tertiaire).

Comme indiqué précédemment, l'onde de réponse correspond à la partie de l'onde d'interrogation qui est rétrodiffusée. Il en résulte que la puissance de l'onde de réponse au niveau du photodétecteur 52, à un instant donné, est représentative de la puissance de l'onde d'interrogation à une position associée à cet instant. Ceci est mis en œuvre pour le calcul du profil d'atténuation du guide d'onde 16.

Plus précisément, l'organe de commande 42 est configuré pour associer la valeur du signal de détection, à un instant donné, à une position correspondante, notée z, le long du trajet de l'onde d'interrogation. Le signal de détection étant représentatif de la puissance de l'onde de réponse, une telle opération revient à déterminer un profil de puissance, noté $P_i(z)$, de l'onde de réponse en fonction de la position z.

Dans ce qui suit, l'indice i vaut 2 pour les grandeurs relatives au dopant secondaire, et vaut 3 pour les grandeurs relatives au dopant tertiaire.

De préférence, la position z est définie par rapport à un point de référence de position connue, par la mise en œuvre de la relation :

$$z = \frac{c.\Delta t}{2n} \quad (1)$$

où c est la vitesse de la lumière dans le vide ;

$\Delta t$ est le temps écoulé entre la réception de l'onde de réponse issue du point de référence et la réception de l'onde de réponse issue du point de position z ; et

n est l'indice optique du milieu traversé par l'onde d'interrogation, par exemple l'indice optique du guide d'onde 16.

Par exemple, la position du point de référence correspond à la position de la connexion 40.

Avantageusement, l'organe de commande 42 est configuré pour normaliser le profil de puissance $P_i(z)$ par rapport à sa valeur pour un point prédéterminé le long du trajet de l'onde d'interrogation, de préférence par rapport à sa valeur au pic 66. Une telle normalisation élimine l'influence des variations d'atténuation en amont du détecteur 8 (atténuation induite par les radiations sur la fibre de déport 12, évolution du couplage sur la traversée optique 38, etc.) qui ne sont pas maîtrisées en situation pratique sur une durée opérationnelle de plusieurs dizaines d'années.

De préférence, l'organe de commande 42 est configuré pour accumuler une pluralité de profils de puissance obtenus pour une pluralité d'impulsions émises depuis la même source 44, dans une fenêtre temporelle donnée, par exemple de l'ordre de l'heure, le profil de puissance $P_i(z)$ étant égal au résultat de cette accumulation.

De préférence, l'organe de commande 42 est également configuré pour calculer, à partir du profil de puissance $P_i(z)$, un profil d'atténuation $\alpha_i(z,\lambda_i)$ (c'est-à-dire un profil du coefficient d'atténuation en fonction de la position z), à la longueur d'onde $\lambda_i$ de l'onde d'interrogation.

Plus précisément, l'organe de commande 42 est configuré pour calculer le profil d'atténuation à partir de la relation suivante (dite loi de Beer-Lambert) :

$$\alpha_i(z,\lambda_i)=\frac{1}{P_i(z)}\frac{dP_i(z)}{dz} \quad (2)$$

où $\alpha_i(z,\lambda_i)$ est le coefficient d'atténuation (exprimé en $cm^{-1}$, par exemple) à la position z le long du guide d'onde 16, et à la longueur d'onde $\lambda_i$ ; et
d/dz est l'opérateur « dérivée par rapport à la position z ».

Le coefficient d'atténuation tient à la fois compte des phénomènes d'absorption et de diffusion. Toutefois, dans le cadre de l'invention, la part de l'absorption domine, de sorte que la contribution de la diffusion au coefficient d'atténuation est négligée. Il en résulte que, dans le guide d'onde 16, le coefficient d'atténuation est assimilable à un coefficient d'absorption.

En outre, l'organe de commande 42 est configuré pour calculer une information relative à une concentration de dopant secondaire (respectivement tertiaire) dans le guide d'onde optique. Plus précisément, l'organe de commande 42 est configuré pour calculer un profil de concentration du dopant secondaire (respectivement tertiaire), en particulier par la mise en œuvre de la relation :

$$N_i(z)=\frac{\alpha_i(z,\lambda_i)}{\sigma_i(\lambda_i)} \quad (3)$$

où $N_i(z)$ est le profil de concentration (exprimé en $cm^{-3}$, par exemple) du dopant secondaire (respectivement tertiaire) ; et
$\sigma_i(\lambda_i)$ est la section d'interaction (exprimée en $cm^2$, par exemple) du dopant secondaire (respectivement tertiaire) à la longueur d'onde secondaire (respectivement tertiaire) $\lambda_i$.

En outre, l'organe de commande 42 est configuré pour déterminer, à partir du profil de concentration du dopant secondaire, un profil de fluence neutronique rapide, noté $\Phi(z)$, par la mise en œuvre de la relation :

$$\Phi(z)=K_n\frac{N_2(z)}{N_1(z)} \quad (4)$$

où $K_n$ est le coefficient de conversion neutronique prédéterminé ; et
$N_1(z)$ est un profil de concentration du dopant primaire.

Le profil de concentration $N_1(z)$ est, de préférence, prédéterminé (en particulier, obtenu par étalonnage selon la technique précédemment décrite) et stocké dans l'organe de commande 42.

Un tel profil de fluence neutronique rapide $\Phi(z)$ est représentatif d'une fluence de neutrons rapides subie par la paroi 4 de la cuve 6, en particulier pendant la durée secondaire prédéterminée.

Le coefficient de conversion neutronique $K_n$ est un coefficient permettant l'estimation de la fluence neutronique rapide dans la cuve 6 (qui est pertinente pour l'estimation du vieillissement de la paroi 4) à partir de la mesure du taux de dopant secondaire dans le guide d'onde 16 (défini comme le rapport entre les concentrations en dopants secondaire et primaire), ce taux traduisant une fluence neutronique thermique ex-*core.*

Le coefficient de conversion neutronique $K_n$ est, par exemple, un coefficient obtenu par simulation, notamment par simulation Monte-Carlo (codes MCNP, TRIPOLI ou MERCURE, par exemple), prenant en compte la géométrie et la composition du cœur 9, ainsi que les caractéristiques du détecteur 8, par exemple les caractéristiques de la couche de modération 18, de la couche d'arrêt 20 ou encore du guide d'onde 16.

Avantageusement, l'organe de commande 42 est également configuré pour déterminer, à partir du profil de concentration du dopant tertiaire, un profil de dose, noté D(z), par la mise en œuvre de la relation :

$$D(z){=}K_p\frac{N_3(z)}{N_1(z)} \quad (5)$$

où $K_p$ est le coefficient de conversion photonique prédéterminé.

Un tel profil de dose D(z) est représentatif d'une dose absorbée par la paroi 4 de la cuve 6 pendant la durée tertiaire prédéterminée.

Le coefficient de conversion neutronique $K_p$ est un coefficient permettant l'estimation de la dose absorbée par la paroi 4 à partir de la mesure du taux de dopant tertiaire dans le guide d'onde 16, ce taux étant représentatif d'une dose absorbée par le détecteur 8 à l'extérieur de la cuve 6.

Le coefficient de conversion photonique $K_p$ est, par exemple, un coefficient obtenu par simulation, notamment par simulation Monte-Carlo (codes MCNP, TRIPOLI ou MERCURE, par exemple), prenant en compte la géométrie et la composition du cœur 9, ainsi que les caractéristiques du détecteur 8, par exemple les caractéristiques de la couche de modération 18, de la couche d'arrêt 20 ou encore du guide d'onde 16.

Avantageusement, pour chaque détecteur 8, l'organe de commande 42 est également configuré pour déterminer, de façon similaire à ce qui a été décrit précédemment, et au moyen de la première source secondaire complémentaire associée, un profil d'atténuation du guide d'onde optique 16 correspondant, à la première longueur d'onde secondaire complémentaire.

Dans ce cas, l'organe de commande 42 est également configuré pour calculer l'information relative à la concentration de dopant secondaire à partir du résultat d'une correction du profil d'atténuation à la longueur d'onde secondaire par le profil d'atténuation à la première longueur d'onde secondaire complémentaire, noté $\alpha_{2,1}(z,\lambda_{2,1})$, $\lambda_{2,1}$ désignant la première longueur d'onde secondaire complémentaire.

Plus précisément, l'organe de commande 42 est configuré pour remplacer, dans le relation (3), le coefficient d'atténuation $\alpha_2(z,\lambda_2)$ par la grandeur $A_2(z,\lambda_2)$ obtenue par :

$$A_2(z,\lambda_2){=}\alpha_2(z,\lambda_2){-}\alpha_{2,1}\left(z,\lambda_{2,1}\right) \quad (6)$$

Avantageusement encore, pour chaque détecteur 8, l'organe de commande 42 est configuré pour déterminer, de façon similaire à ce qui a été décrit précédemment :

- un profil d'atténuation du guide d'onde optique 16 correspondant à la première longueur d'onde secondaire complémentaire, au moyen de la première source secondaire complémentaire ; et
- un profil d'atténuation du guide d'onde optique 16 correspondant à la deuxième longueur d'onde secondaire complémentaire, au moyen de la deuxième source secondaire complémentaire.

Dans ce cas, l'organe de commande 42 est également configuré pour calculer l'information relative à la concentration de dopant secondaire à partir du résultat d'une correction du profil d'atténuation à la longueur d'onde secondaire par chacun du profil d'atténuation $\alpha_{2,1}(z,\lambda_{2,1})$ à la première longueur d'onde secondaire complémentaire, et du profil d'atténuation à la deuxième longueur d'onde secondaire complémentaire, noté $\alpha_{2,2}(z,\lambda_{2,2})$, $\lambda_{2,2}$ désignant la deuxième longueur d'onde secondaire complémentaire.

Plus précisément, l'organe de commande 42 est configuré pour remplacer, dans le relation (3), le coefficient d'atténuation $\alpha_2(z,\lambda_2)$ par la grandeur $A_2(z,\lambda_2)$ obtenue par :

$$A_2(z,\lambda_2){=}\left[\alpha_2(z,\lambda_2){-}\alpha_{2,1}\left(z,\lambda_{2,1}\right)\right]{+}\left[\alpha_{2,1}\left(z,\lambda_{2,1}\right){-}\alpha_{2,2}\left(z,\lambda_{2,2}\right)\right]\frac{\lambda_2{-}\lambda_{2,1}}{\lambda_{2,2}{-}\lambda_{2,1}} \quad (7)$$

Une telle correction est avantageuse, dans la mesure où elle conduit à réduire l'influence des variations d'atténuation en amont du détecteur 8 (atténuation induite par les radiations sur la fibre de déport 12, évolution du couplage sur la traversée optique 38, etc.) qui ne sont pas maîtrisées en situation pratique sur une durée opérationnelle de plusieurs dizaines d'années. Une telle correction est également apte à réduire l'effet, sur le profil d'atténuation, d'une absorption du dopant primaire à la longueur d'onde secondaire.

Dans le cas où les première et deuxième longueurs d'onde secondaires complémentaires sont symétriques par rapport à la longueur d'onde secondaire, la relation (7) se simplifie en une relation dite « correction d'Allen » :

$$A_2(z,\lambda_2)=\alpha_2(z,\lambda_2)-\frac{\alpha_{2,1}(z,\lambda_{2,1})+\alpha_{2,2}(z,\lambda_{2,2})}{2} \quad (8)$$

Un fonctionnement similaire est envisagé pour corriger le profil d'atténuation à la longueur d'onde tertiaire à partir du profil d'atténuation à la première longueur d'onde tertiaire complémentaire, ou à partir du profil d'atténuation à la première longueur d'onde tertiaire complémentaire et du profil d'atténuation à la deuxième longueur d'onde tertiaire complémentaire.

Le fonctionnement du système de mesure 2 va maintenant être décrit.

Avant la mise en œuvre du système de mesure 2, les données de conversion sont enregistrées dans l'organe de commande 42.

Chaque détecteur 8 est agencé sur la surface externe 14 de la paroi 4 de la cuve 6, la couche de modération 18 étant placée entre la surface externe 14 et le guide d'onde 4.

Puis, l'organe de commande 42 commande l'émission de chaque source 44 afin de générer l'onde d'interrogation correspondante.

En outre, l'organe de commande 42 commande le commutateur interne 48 et le commutateur externe 50 pour acheminer l'onde d'interrogation de façon sélective depuis une source 44 donnée vers un détecteur 8 donné. L'étage de détection 46 délivre alors le signal de détection résultant de la détection de l'onde de réponse correspondante.

Puis, à partir du signal de détection délivré par l'étage de détection 46 pour ladite source 44 et ledit détecteur 8, l'organe de commande 42 détermine le profil de puissance $P_i(z)$.

Puis, l'organe de commande 42 calcule, à partir du profil de puissance $P_i(z)$, le profil d'atténuation $\alpha_i(z,\lambda_i)$ à la longueur d'onde $\lambda_i$ de l'onde d'interrogation.

Puis, l'organe de commande 42 calcule le profil de concentration du dopant secondaire ou tertiaire, selon la longueur d'onde $\lambda_i$ de l'onde d'interrogation.

Puis, l'organe de commande 42 détermine :

- à partir du profil de concentration du dopant secondaire, le profil de fluence neutronique rapide subie par la paroi 4 de la cuve 6, en particulier pendant la durée secondaire prédéterminée (notamment la durée d'exposition, assimilable à la durée opérationnelle) ; et/ou
- à partir du profil de concentration du dopant tertiaire, le profil de dose absorbée par la paroi 4 de la cuve 6, en particulier pendant la durée tertiaire prédéterminée (notamment la durée d'exposition, assimilable à la durée opérationnelle).

En variante, le fonctionnement du système de mesure 2 repose la réflectométrie optique fréquentielle (« *optical frequency-domain reflectometry* » en anglais), cohérente ou incohérente. Dans ce cas, chaque source 44 est, de préférence, une source continue.

Dans le cas de la réflectométrie optique fréquentielle cohérente, l'organe de commande 42 est configuré pour commander chaque source 44 afin d'accorder la longueur d'onde de l'onde d'interrogation qu'elle émet.

Dans ce cas, une interférence entre l'onde de réponse reçue depuis un détecteur 8 donné et une fraction de l'onde d'interrogation (éventuellement retardée) correspondante est réalisée au niveau d'une entrée du photodétecteur 52.

Dans ce cas, le signal de détection correspond à la transformée de Fourier du profil de puissance illustré par la figure 5.

Dans ce cas, l'organe de commande 42 est configuré pour calculer le profil de puissance comme le résultat de la transformée de Fourier inverse du signal de détection.

Le calcul de la fluence neutronique rapide et/ou de la dose absorbée se font de façon similaire à ce qui a été décrit précédemment.

Le recours à la réflectométrie optique fréquentielle cohérente est avantageux, dans la mesure où la résolution spatiale est bien meilleure que pour la réflectométrie optique temporelle (typiquement de l'ordre du millimètre).

Dans le cas de la réflectométrie optique fréquentielle incohérente, l'organe de commande est configuré pour commander chaque source 44 de façon à moduler l'amplitude de l'onde d'interrogation, sa longueur d'onde étant fixe dans le temps.

Dans ce cas, l'organe de commande 42 est configuré pour enregistrer le signal de détection pour différentes fréquences de modulation.

En outre, l'organe de commande 42 est configuré pour calculer le profil de puissance à partir des signaux de détection enregistrés pour les différentes fréquences de modulation, par la mise en œuvre d'une transformée de Fourier inverse. Un tel calcul est connu, et ne sera pas décrit davantage.

Le recours à la réflectométrie optique fréquentielle incohérente est avantageux, dans la mesure où cette technique est plus robuste que la réflectométrie optique fréquentielle cohérente : en effet, cette dernière requiert généralement, contrairement à la réflectométrie optique fréquentielle incohérente, une stabilisation mécanique en vue d'une acquisition du signal d'interférence. En outre, les difficultés de maintien des paramètres de lecture sur plusieurs décennies, afin de mettre en corrélation un profil d'atténuation déterminé à un instant donné avec le profil d'atténuation de référence déterminé à la mise en service du système de mesure avec les mêmes paramètres optoélectroniques (problème de pérennité des informations et du matériel), se posent moins dans le cas de la réflectométrie optique fréquentielle incohérente.

Le calcul de la fluence neutronique rapide et/ou de la dose absorbée se font de façon similaire à ce qui a été décrit précédemment.

Selon une autre variante, le dispositif d'analyse 10 est configuré pour déterminer, pour chaque détecteur 8, la fluence neutronique et/ou la dose absorbée intégrée sur toute la longueur du guide d'onde 16 correspondant.

Plus précisément, le dispositif d'analyse 10 est configuré de façon à, pour chaque détecteur 8, déterminer, à partir de l'onde de réponse reçue, une quantité totale de lumière de fluorescence émise par le guide d'onde optique 16 correspondant sur toute sa longueur, dans une bande spectrale de fluorescence secondaire (respectivement tertiaire) associée au dopant secondaire (respectivement tertiaire). Par exemple, dans un tel dispositif d'analyse 10, l'étage de détection 46 est un spectromètre optique.

Dans ce cas, le dispositif d'analyse 10 est configuré pour identifier, dans l'onde de réponse reçue en provenance d'un détecteur 8 donné, la partie correspondant à une fluorescence du dopant secondaire (respectivement du dopant tertiaire), c'est-à-dire la partie de l'onde de réponse présentant une longueur d'onde appartenant à une bande spectrale de fluorescence secondaire (respectivement tertiaire) associée au dopant secondaire (respectivement au dopant tertiaire).

Dans ce cas, le dispositif d'analyse 10 est configuré pour calculer la concentration du dopant secondaire et/ou tertiaire à partir de la puissance du signal de fluorescence correspondant. En outre, le dispositif d'analyse 10 est configuré pour déterminer la fluence neutronique rapide et/ou la dose absorbée par la paroi 4 à partir de la concentration calculée et des données de conversion correspondantes. Par exemple, de telles données de conversion (qui dépendent, notamment, de la concentration moyenne en dopant primaire) sont établies expérimentalement, et lient la puissance du signal de fluorescence émis par le guide d'onde 16 à la fluence moyenne au niveau du détecteur 8.

Par exemple, dans le cas où le dopant secondaire est l'ytterbium et le dopant tertiaire est le thulium divalent, la longueur d'onde secondaire est proche de 1066 nm et la longueur d'onde tertiaire est comprise entre 940 nm et 980 nm.

Dans ce cas, le dispositif d'analyse 10 est configuré pour attribuer les photons dans la plage [1020 nm ; 1050 nm] à la fluorescence de l'ytterbium, et les photons dans la plage [1120 nm ; 1190 nm] à la fluorescence du thulium divalent.

Une telle variante est avantageuse, dans la mesure où elle présente un seuil de détection plus bas que les autres modes de réalisation.

**Revendications**

1. Système (2) de mesure de fluence en neutrons rapides pour réacteur nucléaire, comportant au moins un détecteur (8) et un dispositif d'analyse (10) connecté à chaque détecteur (8),

   chaque détecteur (8) comprenant un guide d'onde optique (16)

   **Caractérisé en ce que** :

      - le guide d'onde optique comporte un dopant primaire propre à se transmuter en un dopant secondaire par capture d'un neutron, le dopant secondaire présentant un numéro atomique différent de celui du dopant primaire, le dopant secondaire étant stable et étant moins neutrophage que le dopant primaire ;
      - le détecteur comporte en outre une couche de modération (18) propre à ralentir des neutrons rapides et destinée à être agencée entre le guide d'onde optique (16) et une surface externe (14) d'une paroi (4) d'une cuve (6) du réacteur ;
      - le dispositif d'analyse (10) est configuré de façon à, pour chaque détecteur (8) :
      - injecter, dans le guide d'onde optique (16) correspondant, une onde d'interrogation secondaire présentant une longueur d'onde secondaire à laquelle le dopant secondaire présente un pic d'absorption, le plus petit écart entre la longueur d'onde secondaire et une longueur d'onde correspondant à un pic d'absorption du dopant primaire étant supérieur ou égal à un premier écart minimal prédéterminé ;
      - détecter une onde de réponse secondaire émise par le guide d'onde optique (16) correspondant à partir de l'onde d'interrogation secondaire ;
      - calculer, à partir de l'onde de réponse secondaire détectée, une information relative à une concentration de dopant secondaire dans le guide d'onde optique (16) correspondant ; et
      - à partir de l'information relative à la concentration de dopant secondaire calculée, et de données de conversion relatives au réacteur nucléaire, déterminer une fluence de neutrons rapides subie par la paroi (4)

de la cuve (6) pendant une durée secondaire prédéterminée.

2.  Système de mesure (2) selon la revendication 1, dans lequel le dopant primaire est le thulium et/ou l'europium, le dopant secondaire étant l'ytterbium ou le samarium, respectivement

3.  Système de mesure (2) selon la revendication 1 ou 2, comportant, en outre, une couche (20) d'arrêt de neutrons thermiques destinée à être agencée entre la couche de modération (18) et la surface externe (14) de la paroi (4) de la cuve (6), la couche (20) d'arrêt de neutrons thermiques étant, de préférence, réalisée en cadmium.

4.  Système de mesure (2) selon l'une quelconque des revendications 1 à 3, dans lequel le dispositif d'analyse est configuré de façon à, pour chaque détecteur, déterminer, par réflectométrie temporelle ou par réflectométrie fréquentielle, à partir de l'onde de réponse secondaire détectée, un profil d'atténuation du guide d'onde optique (16) correspondant, à la longueur d'onde secondaire, en fonction d'une position le long du guide d'onde optique (16), le dispositif d'analyse (10) étant configuré pour calculer l'information relative à la concentration de dopant secondaire à partir du profil d'atténuation à la longueur d'onde secondaire déterminé.

5.  Système de mesure (2) selon l'une quelconque des revendications 1 à 4, dans lequel le dispositif d'analyse (10) est également configuré de façon à, pour chaque détecteur (8) :

    - injecter, dans le guide d'onde optique (16) correspondant, une ou deux ondes d'interrogation secondaires complémentaires optiques présentant chacune une longueur d'onde secondaire complémentaire correspondant à un pied respectif du pic d'absorption associé à la longueur d'onde secondaire ;
    - pour chaque onde d'interrogation secondaire complémentaire, détecter une onde de réponse secondaire complémentaire correspondante émise par le guide d'onde optique (16) correspondant ; et
    - déterminer, par réflectométrie temporelle ou par réflectométrie fréquentielle, à partir de chaque onde de réponse secondaire complémentaire détectée, un profil d'atténuation du guide d'onde optique (16) correspondant, à la longueur d'onde secondaire complémentaire, en fonction d'une position le long du guide d'onde optique (16),

    le dispositif d'analyse (10) étant configuré pour calculer l'information relative à la concentration de dopant secondaire à partir du résultat d'une correction du profil d'atténuation à la longueur d'onde secondaire par le profil d'atténuation associé à chaque longueur d'onde secondaire complémentaire.

6.  Système de mesure (2) selon l'une quelconque des revendications 1 à 3, dans lequel le dispositif d'analyse (10) est configuré de façon à, pour chaque détecteur (8), déterminer, à partir de l'onde de réponse secondaire détectée, une quantité totale secondaire de lumière de fluorescence émise par le guide d'onde optique (16) correspondant sur toute sa longueur, dans une bande spectrale de fluorescence secondaire associée au dopant secondaire, l'information relative à la concentration de dopant secondaire dans le guide d'onde optique (16) correspondant étant calculée à partir de la quantité totale secondaire.

7.  Système de mesure (2) selon l'une quelconque des revendications 1 à 6, dans lequel, pour chaque détecteur, le dopant primaire est également propre à se transformer en un dopant tertiaire par irradiation par un photon, le dopant tertiaire présentant le même numéro atomique que le dopant primaire mais une valence différente ;
    le dispositif d'analyse (10) étant également configuré de façon à, pour chaque détecteur (8) :

    - injecter, dans le guide d'onde optique (16) correspondant, une onde d'interrogation tertiaire optique présentant une longueur d'onde tertiaire à laquelle le dopant tertiaire présente un pic d'absorption, la longueur d'onde tertiaire étant telle que le plus petit écart entre la longueur d'onde tertiaire et une longueur d'onde correspondant à un pic d'absorption du dopant primaire ou du dopant secondaire est supérieur ou égal à un troisième écart minimal prédéterminé ;
    - détecter une onde de réponse tertiaire émise par le guide d'onde optique (16) correspondant à partir de l'onde d'interrogation tertiaire ;
    - calculer, à partir de l'onde de réponse tertiaire détectée, une information relative à une concentration de dopant tertiaire ; et
    - déterminer, à partir de l'information relative à la concentration de dopant tertiaire, et des données de conversion, une dose de rayonnement photon absorbée par la paroi (4) de la cuve (6) pendant une durée tertiaire prédéterminée.

8.  Système de mesure (2) selon la revendication 7, dans lequel le dopant tertiaire est le thulium divalent et/ou l'europium divalent, le dopant primaire étant le thulium trivalent ou l'europium trivalent, respectivement

9. Système de mesure (2) selon la revendication 7 ou 8, dans lequel le dispositif d'analyse (10) est configuré de façon à, pour chaque détecteur (8), déterminer, par réflectométrie temporelle ou par réflectométrie fréquentielle, à partir de l'onde de réponse tertiaire détectée, un profil d'atténuation du guide d'onde optique (16) correspondant, à la longueur d'onde tertiaire, en fonction d'une position le long du guide d'onde optique (16),
le dispositif d'analyse (10) étant configuré pour calculer l'information relative à la concentration de dopant tertiaire à partir du profil d'atténuation à la longueur d'onde tertiaire.

10. Système de mesure (2) selon l'une quelconque des revendications 7 à 9, dans lequel le dispositif d'analyse (10) est également configuré de façon à, pour chaque détecteur (8) :

   - injecter, dans le guide d'onde optique (16) correspondant, une ou deux ondes d'interrogation tertiaires complémentaires optiques présentant chacune une longueur d'onde tertiaire complémentaire correspondant à un pied respectif du pic d'absorption associé à la longueur d'onde tertiaire ;
   - pour chaque onde d'interrogation tertiaire complémentaire, détecter une onde de réponse tertiaire complémentaire correspondante émise par le guide d'onde optique (16) ; et
   - déterminer, par réflectométrie temporelle ou par réflectométrie fréquentielle, à partir de chaque onde de réponse tertiaire complémentaire détectée, un profil d'atténuation du guide d'onde optique (16) correspondant, à la longueur d'onde tertiaire complémentaire, en fonction d'une position le long du guide d'onde optique (16),

   le dispositif d'analyse (10) étant configuré pour calculer l'information relative à la concentration de dopant tertiaire à partir du résultat d'une correction du profil d'atténuation à la longueur d'onde tertiaire par le profil d'atténuation associé à chaque longueur d'onde tertiaire complémentaire.

11. Système de mesure (2) selon l'une quelconque des revendications 7 à 10, dans lequel le dispositif d'analyse (10) est configuré de façon à, pour chaque détecteur (8), déterminer, à partir de l'onde de réponse tertiaire détectée, une quantité totale tertiaire de lumière de fluorescence émise par le guide d'onde optique (16) correspondant sur toute sa longueur, dans une bande spectrale de fluorescence tertiaire associée au dopant tertiaire, l'information relative à la concentration de dopant tertiaire dans le guide d'onde optique (16) correspondant étant calculée à partir de la quantité totale tertiaire.

12. Installation comprenant un réacteur nucléaire et un système de mesure (2) selon l'une quelconque des revendications 1 à 11, chaque détecteur (8) étant disposé sur une surface externe (14) d'une paroi (4) d'une cuve (6) du réacteur nucléaire et, pour chaque détecteur (8), la couche de modération (18) étant agencée entre le guide d'onde optique (16) correspondant et la surface externe (14).

13. Procédé de mesure de fluence en neutrons rapides pour réacteur nucléaire, mettant en œuvre au moins un détecteur (8) comprenant :

   - un guide d'onde optique (16) comportant un dopant primaire propre à se transmuter en un dopant secondaire par capture d'un neutron, le dopant secondaire présentant un numéro atomique différent de celui du dopant primaire, le dopant secondaire étant stable et étant moins neutrophage que le dopant primaire ;
   - une couche de modération (18) propre à ralentir des neutrons rapides et agencée entre le guide d'onde optique (16) et une surface externe (14) d'une paroi (4) d'une cuve (6) du réacteur,

   le procédé de mesure comprenant, pour chaque détecteur (8), les étapes :

   - injection, dans le guide d'onde optique (16) correspondant, une onde d'interrogation secondaire présentant une longueur d'onde secondaire à laquelle le dopant secondaire présente un pic d'absorption, le plus petit écart entre la longueur d'onde secondaire et une longueur d'onde correspondant à un pic d'absorption du dopant primaire étant supérieur ou égal à un écart minimal prédéterminé ;
   - détection d'une onde de réponse secondaire émise par le guide d'onde optique (16) correspondant à partir de l'onde d'interrogation secondaire ;
   - calcul, à partir de l'onde de réponse secondaire détectée, d'une information relative à une concentration de dopant secondaire dans le guide d'onde optique (16) correspondant ; et
   - à partir de l'information relative à la concentration de dopant secondaire calculée, et de données de conversion relatives au réacteur nucléaire, détermination d'une fluence de neutrons rapides subie par la paroi (4) de la cuve (6) pendant une durée secondaire prédéterminée.

**Patentansprüche**

1. System (2) zur Messung der schnellen Neutronenfluenz für Kernreaktoren, umfassend mindestens einen Detektor (8) und eine Analysevorrichtung (10), die an jeden Detektor (8) angeschlossen ist,

   wobei jeder Detektor (8) einen optischen Wellenleiter (16) umfasst,
   **dadurch gekennzeichnet, dass**:

   - der optische Wellenleiter einen Primärdotierstoff aufweist, der sich durch Einfangen eines Neutrons in einen Sekundärdotierstoff transmutieren kann, wobei der Sekundärdotierstoff eine andere Atomnummer aufweist als der Primärdotierstoff, wobei der Sekundärdotierstoff stabil und weniger neutronenabsorbierend ist als der Primärdotierstoff;
   - der Detektor weiter eine Moderationsschicht (18) umfasst, die dazu dient, schnelle Neutronen zu verlangsamen, und dazu ausgelegt ist, zwischen dem optischen Wellenleiter (16) und einer äußeren Oberfläche (14) einer Wand (4) eines Behälters (6) des Reaktors angeordnet zu sein;
   - die Analysevorrichtung (10) für jeden Detektor (8) zu Folgendem ausgebildet ist:
   - Injizieren, in den entsprechenden optischen Wellenleiter (16), einer Sekundärabfragewelle mit einer Sekundärwellenlänge, bei der der Sekundärdotierstoff einen Absorptionspeak aufweist, wobei die kleinste Abweichung zwischen der Sekundärwellenlänge und einer Wellenlänge, die einem Absorptionspeak des Primärdotierstoffs entspricht, größer oder gleich einer ersten vorbestimmten minimalen Abweichung ist;
   - Detektieren einer Sekundärantwortwelle, die vom entsprechenden optischen Wellenleiter (16) aus der Sekundärabfragewelle ausgegeben wird;
   - Berechnen einer Information über eine Sekundärdotierstoffkonzentration im entsprechenden optischen Wellenleiter (16) aus der detektierten Sekundärantwortwelle; und
   - aus der Information über die berechnete Sekundärdotierstoffkonzentration und den Umwandlungsdaten über den Kernreaktor, Bestimmen einer schnellen Neutronenflussdichte, der die Wand (4) des Behälters (6) während einer vorbestimmten Sekundärdauer ausgesetzt ist.

2. Messsystem (2) nach Anspruch 1, wobei der Primärdotierstoff Thulium und/oder Europium ist, wobei der Sekundärdotierstoff Ytterbium bzw. Samarium ist.

3. Messsystem (2) nach Anspruch 1 oder 2, das weiter eine thermische Neutronenstoppschicht (20) aufweist, die dazu bestimmt ist, zwischen der Moderationsschicht (18) und der Außenfläche (14) der Wand (4) des Behälters (6) angeordnet zu sein, wobei die thermische Neutronenstoppschicht (20) vorzugsweise aus Cadmium hergestellt ist.

4. Messsystem (2) nach einem der Ansprüche 1 bis 3, wobei die Analysevorrichtung so ausgebildet ist, dass sie für jeden Detektor, durch zeitliche Reflektometrie oder durch Frequenzreflexometrie, aus der detektierten Sekundärantwortwelle, ein Dämpfungsprofil des optischen Wellenleiters (16) entsprechend der Sekundärwellenlänge in Abhängigkeit von einer Position entlang des optischen Wellenleiters (16) bestimmt,
   wobei die Analysevorrichtung (10) so ausgebildet ist, dass sie die Information über die Sekundärdotierstoffkonzentration aus dem bestimmten Dämpfungsprofil bei der Sekundärwellenlänge berechnet.

5. Messsystem (2) nach einem der Ansprüche 1 bis 4, wobei die Analysevorrichtung (10) für jeden Detektor (8) auch zu Folgendem ausgebildet ist:

   - Injizieren in den entsprechenden optischen Wellenleiter (16) einer oder zwei komplementären optischen Sekundärabfragewellen, die jeweils eine komplementäre Sekundärwellenlänge aufweisen, die einem jeweiligen Fuß des der Sekundärwellenlänge zugeordneten Absorptionspeaks entspricht;
   - für jede komplementäre Sekundärabfragewelle, Detektieren einer entsprechenden komplementären Sekundärantwortwelle, die vom entsprechenden optischen Wellenleiter (16) ausgegeben wird; und
   - Bestimmen eines Dämpfungsprofils des optischen Wellenleiters (16), das der komplementären Sekundärwellenlänge in Abhängigkeit von einer Position entlang des optischen Wellenleiters (16) entspricht, durch zeitliche Reflektometrie oder durch Frequenzreflexometrie, aus jeder detektierten Sekundärantwortwelle,

   wobei die Analysevorrichtung (10) so ausgebildet ist, dass sie die Information über die Sekundärdotierstoffkonzentration aus dem Ergebnis einer Korrektur des Dämpfungsprofils auf die Sekundärwellenlänge durch das mit jeder komplementären Sekundärwellenlänge verbundene Dämpfungsprofil berechnet.

6. Messsystem (2) nach einem der Ansprüche 1 bis 3, wobei die Analysevorrichtung (10) so ausgebildet ist, dass sie für jeden Detektor (8) aus der detektierten Sekundärantwortwelle eine Sekundärgesamtmenge des Fluoreszenzlichts bestimmt, das von dem entsprechenden optischen Wellenleiter (16) über seine gesamte Länge in einem dem Sekundärdotierstoff zugeordneten Sekundärfluoreszenzspektralband ausgegeben wird, wobei die Information über die Sekundärdotierstoffkonzentration im entsprechenden optischen Wellenleiter (16) aus der Sekundärgesamtmenge berechnet wird.

7. Messsystem (2) nach einem der Ansprüche 1 bis 6, wobei für jeden Detektor der Primärdotierstoff auch dazu dient, sich durch Photonenbestrahlung in einen Tertiärdotierstoff umzuwandeln, wobei der Tertiärdotierstoff die gleiche Atomnummer wie der Primärdotierstoff, aber eine andere Valenz aufweist;
wobei die Analysevorrichtung (10) für jeden Detektor (8) auch zu Folgendem ausgebildet ist:

- Injizieren, in den entsprechenden optischen Wellenleiter (16), einer optischen Tertiärabfragewelle mit einer Tertiärwellenlänge, bei der der Tertiärdotierstoff einen Absorptionspeak aufweist, wobei die Tertiärwellenlänge so ist, dass der kleinste Abstand zwischen der Tertiärwellenlänge und einer Wellenlänge, die einem Absorptionspeak des Primärdotierstoffs oder des Sekundärdotierstoffs entspricht, größer oder gleich einem vorbestimmten dritten Mindestabstand ist;
- Detektieren einer vom entsprechenden optischen Wellenleiter (16) aus der Tertiärabfragewelle ausgegebenen Tertiärantwortwelle;
- Berechnen, aus der detektierten Tertiärantwortwelle, einer Information über eine Tertiärdotierstoffkonzentration; und
- Bestimmen einer von der Wand (4) des Behälters (6) für eine vorbestimmte Tertiärdauer absorbierten Photonenstrahlungsdosis aus der Information über die Tertiärdotierstoffkonzentration und den Umwandlungsdaten.

8. Messsystem (2) nach Anspruch 7, wobei der Tertiärdotierstoff divalentes Thulium und/oder divalentes Europium ist, wobei der Primärdotierstoff trivalentes Thulium bzw. trivalentes Europium ist.

9. Messsystem (2) nach Anspruch 7 oder 8, wobei die Analysevorrichtung (10) so ausgebildet ist, dass sie für jeden Detektor (8), durch zeitliche Reflektometrie oder durch Frequenzreflexometrie, aus der detektierten Tertiärantwortwelle, ein der Tertiärwellenlänge entsprechendes Dämpfungsprofil des optischen Wellenleiters (16) in Abhängigkeit von einer Position entlang des Lichtwellenleiters (16) bestimmt,
wobei die Analysevorrichtung (10) so ausgebildet ist, dass sie die Information über die Tertiärdotierstoffkonzentration aus dem Dämpfungsprofil bei der Tertiärwellenlänge berechnet.

10. Messsystem (2) nach einem der Ansprüche 7 bis 9, wobei die Analysevorrichtung (10) für jeden Detektor (8) weiter zu Folgendem ausgebildet ist:

- Injizieren, in den entsprechenden optischen Wellenleiter (16), einer oder zwei optischen komplementären Tertiärabfragewellen, die jeweils eine komplementäre Tertiärwellenlänge aufweisen, die einem jeweiligen Fuß des mit der Tertiärwellenlänge verbundenen Absorptionspeaks entspricht;
- für jede komplementäre Tertiärabfragewelle, Detektieren einer entsprechenden komplementären Tertiärantwortwelle, die vom optischen Wellenleiter (16) ausgegeben wird; und
- Bestimmen eines Dämpfungsprofils des optischen Wellenleiters (16), das der komplementären Tertiärwellenlänge in Abhängigkeit von einer Position entlang des optischen Wellenleiters (16) entspricht, durch zeitliche Reflektometrie oder durch Frequenzreflexometrie, aus jeder detektierten komplementären Tertiärantwortwelle,

wobei die Analysevorrichtung (10) so ausgebildet ist, dass sie die Information in Bezug auf die Tertiärdotierstoffkonzentration aus dem Ergebnis einer Korrektur des Dämpfungsprofils auf die Tertiärwellenlänge durch das mit jeder komplementären Tertiärwellenlänge verbundene Dämpfungsprofil berechnet.

11. Messsystem (2) nach einem der Ansprüche 7 bis 10, wobei die Analysevorrichtung (10) so ausgebildet ist, dass sie für jeden Detektor (8) aus der detektierten Tertiärantwortwelle eine Tertiärgesamtmenge des Fluoreszenzlichts bestimmt, das von dem entsprechenden optischen Wellenleiter (16) über seine gesamte Länge in einem dem Tertiärdotierstoff zugeordneten Tertiärfluoreszenzspektralband ausgegeben wird, wobei die Information über die Tertiärdotierstoffkonzentration im entsprechenden optischen Wellenleiter (16) aus der Tertiärgesamtmenge berechnet wird.

**12.** Anlage umfassend einen Kernreaktor und ein Messsystem (2) nach einem der Ansprüche 1 bis 11, wobei jeder Detektor (8) an einer Außenfläche (14) einer Wand (4) eines Behälters (6) des Kernreaktors angeordnet ist und für jeden Detektor (8) die Moderationsschicht (18) zwischen dem entsprechenden optischen Wellenleiter (16) und der Außenfläche (14) angeordnet ist.

**13.** Messverfahren der schnellen Neutronenflussdichte für einen Kernreaktor, wobei mindestens ein Detektor (8) eingesetzt wird, das Folgendes aufweist:

- einen optischen Wellenleiter (16), der einen Primärdotierstoff aufweist, der sich durch Einfangen eines Neutrons in einen Sekundärdotierstoff transmutieren kann, wobei der Sekundärdotierstoff eine andere Atomnummer aufweist als der Primärdotierstoff, wobei der Sekundärdotierstoff stabil und weniger neutronenabsorbierend ist als der Primärdotierstoff;
- eine Moderationsschicht (18), die dazu dient, schnelle Neutronen zu verlangsamen, und die zwischen dem optischen Wellenleiter (16) und einer äußeren Oberfläche (14) einer Wand (4) eines Behälters (6) des Reaktors angeordnet ist,

wobei das Messverfahren für jeden Detektor (8) folgende Schritte umfasst:

- Injizieren, in den entsprechenden optischen Wellenleiter (16), einer Sekundärabfragewelle mit einer Sekundärwellenlänge, bei der der Sekundärdotierstoff einen Absorptionspeak aufweist, wobei der kleinste Abstand zwischen der Sekundärwellenlänge und einer Wellenlänge, die einem Absorptionspeak des Primärdotierstoffs entspricht, größer oder gleich einem vorbestimmten Mindestabstand ist;
- Detektieren einer Sekundärantwortwelle, die vom entsprechenden optischen Wellenleiter (16) aus der Sekundärabfragewelle ausgegeben wird;
- Berechnen, aus der detektierten Sekundärantwortwelle, einer Information über eine Sekundärdotierstoffkonzentration im entsprechenden optischen Wellenleiter (16); und
- Bestimmen einer schnellen Neutronenflussdichte, der die Wand (4) des Behälters (6) während einer vorbestimmten Sekundärzeit ausgesetzt ist, aus der Information über die berechnete Sekundärdotierstoffkonzentration und den Umwandlungsdaten über den Kernreaktor.

**Claims**

**1.** A system (2) for measuring fast neutron fluence for a nuclear reactor, comprising at least one detector (8) and an analysis device (10) connected to each detector (8),

each detector (8) comprising an optical waveguide (16)
**characterised in that**

- the optical waveguide includes a primary dopant capable of transmuting, by neutron capture, into a secondary dopant, the secondary dopant having an atomic number different from that of the primary dopant, the secondary dopant being stable and being less neutron-absorbent than the primary dopant;
- the detector comprises a moderation layer (18) suitable for slowing down fast neutrons and intended to be arranged between the optical waveguide (16) and an external surface (14) of a wall (4) of a reactor vessel (6);
- the analysis device (10) is configured, for each detector (8), so as to:
- inject, into the corresponding optical waveguide (16), a secondary interrogation wave having a secondary wavelength at which the secondary dopant has an absorption peak, the smallest difference between the secondary wavelength and a wavelength corresponding to an absorption peak of the primary dopant being greater than or equal to a first predetermined minimum difference;
- detect a secondary response wave emitted by the corresponding optical waveguide (16) from the secondary interrogation wave;
- calculate, from the detected secondary response wave, a piece of information relating to a concentration of secondary dopant in the corresponding optical waveguide (16); and
- based on the piece of information relating to the calculated concentration of secondary dopant, and conversion data relating to the nuclear reactor, determine a fast neutron fluence experienced by the wall (4) of the vessel (6) for a predetermined secondary period.

**2.** Measurement system (2) according to claim 1, wherein the primary dopant is thulium and/or europium, the secondary dopant being ytterbium or samarium, respectively.

**3.** Measurement system (2) according to claim 1 or 2, further including a thermal neutron barrier layer (20) intended to be arranged between the moderation layer (18) and the external surface (14) of the wall (4) of the vessel (6), the thermal neutron barrier layer (20) preferably being made of cadmium.

**4.** Measurement system (2) according to any one of claims 1 to 3, wherein the analysis device is configured, for each detector, so as to determine, by time-domain reflectometry or by frequency-domain reflectometry, from the detected secondary response wave, an attenuation profile of the corresponding optical waveguide (16), at the secondary wavelength, according to a position along the optical waveguide (16),
the analysis device (10) being configured to calculate the piece of information relating to the concentration of secondary dopant from the attenuation profile at the determined secondary wavelength.

**5.** Measurement system (2) according to any one of claims 1 to 4, wherein the analysis device (10) is also configured, for each detector (8), so as to:

- inject, into the corresponding optical waveguide (16), one or two optical complementary secondary interrogation waves each having a complementary secondary wavelength corresponding to a respective foot of the absorption peak associated with the secondary wavelength;
- for each complementary secondary interrogation wave, detect a corresponding complementary secondary response wave emitted by the corresponding optical waveguide (16); and
- determine, by time-domain reflectometry or by frequency-domain reflectometry, from each detected complementary secondary response wave, an attenuation profile of the corresponding optical waveguide (16), at the complementary secondary wavelength, according to a position along the optical waveguide (16),

the analysis device (10) being configured to calculate the piece of information relating to the concentration of secondary dopant from the result of a correction of the attenuation profile at the secondary wavelength by the attenuation profile associated with each complementary secondary wavelength.

**6.** Measurement system (2) according to any one of claims 1 to 3, wherein the analysis device (10) is configured, for each detector (8), so as to determine, from the detected secondary response wave, a secondary total amount of fluorescence light emitted by the corresponding optical waveguide (16) over its entire length, in a secondary fluorescence spectral band associated with the secondary dopant, the piece of information relating to the concentration of secondary dopant in the corresponding optical waveguide (16) being calculated from the total secondary amount.

**7.** Measurement system (2) according to any one of claims 1 to 6, wherein, for each detector, the primary dopant is also capable of being transformed into a tertiary dopant by irradiation by a photon, the tertiary dopant having the same atomic number as the primary dopant but a different valence;
the analysis device (10) also being configured, for each detector (8), so as to:

- inject, into the corresponding optical waveguide (16), an optical tertiary interrogation wave having a tertiary wavelength at which the tertiary dopant has an absorption peak, the tertiary wavelength being such that the smallest difference between the tertiary wavelength and a wavelength corresponding to an absorption peak of the primary dopant or of the secondary dopant is greater than or equal to a third predetermined minimum difference;
- detect a tertiary response wave emitted by the corresponding optical waveguide (16) from the tertiary interrogation wave;
- calculate, from the detected tertiary response wave, a piece of information relating to a concentration of tertiary dopant; and
- determine, based on the piece of information relating to the concentration of tertiary dopant, and the conversion data, a dose of photon radiation absorbed by the wall (4) of the vessel (6) for a predetermined tertiary period.

**8.** Measurement system (2) according to claim 7, wherein the tertiary dopant is divalent thulium and/or divalent europium, the primary dopant being trivalent thulium or trivalent europium, respectively

**9.** Measurement system (2) according to claim 7 or 8, wherein the analysis device (10) is configured, for each detector (8), so as to determine, by time-domain reflectometry or by frequency-domain reflectometry, from the detected tertiary response wave, an attenuation profile of the corresponding optical waveguide (16) at the tertiary wavelength, according to a position along the optical waveguide (16),

the analysis device (10) being configured to calculate the piece of information relating to the concentration of tertiary dopant from the attenuation profile at the tertiary wavelength.

10. Measurement system (2) according to any one of claims 7 to 9, wherein the analysis device (10) is also configured, for each detector (8), so as to:

- inject, into the corresponding optical waveguide (16), one or two optical complementary tertiary interrogation waves, each having a complementary tertiary wavelength corresponding to a respective foot of the absorption peak associated with the tertiary wavelength;
- for each complementary tertiary interrogation wave, detect a corresponding complementary tertiary response wave emitted by the optical waveguide (16); and
- determine, by time-domain reflectometry or by frequency-domain reflectometry, from each detected complementary tertiary response wave, an attenuation profile of the corresponding optical waveguide (16), at the complementary tertiary wavelength, according to a position along the optical waveguide (16),

the analysis device (10) being configured to calculate the piece of information relating to the concentration of tertiary dopant from the result of a correction of the attenuation profile at the tertiary wavelength by the attenuation profile associated with each complementary tertiary wavelength.

11. Measurement system (2) according to any one of claims 7 to 10, wherein the analysis device (10) is configured, for each detector (8), so as to determine, from the detected tertiary response wave, a total tertiary amount of fluorescence light emitted by the corresponding optical waveguide (16) over its entire length, in a tertiary fluorescence spectral band associated with the tertiary dopant, the piece of information relating to the concentration of tertiary dopant in the corresponding optical waveguide (16) being calculated from the total tertiary amount.

12. Installation comprising a nuclear reactor and a measurement system (2) according to any one of claims 1 to 11, each detector (8) being disposed on an external surface (14) of a wall (4) of a vessel (6) of the nuclear reactor and, for each detector (8), the moderation layer (18) being arranged between the corresponding optical waveguide (16) and the external surface (14).

13. Method for measuring fast neutron fluence for a nuclear reactor, implementing at least one detector (8) comprising:

- an optical waveguide (16) including a primary dopant capable of transmuting, by neutron capture, into a secondary dopant, the secondary dopant having an atomic number different from that of the primary dopant, the secondary dopant being stable and being less neutron-absorbent than the primary dopant;
- a moderation layer (18) suitable for slowing down fast neutrons and arranged between the optical waveguide (16) and an external surface (14) of a wall (4) of a reactor vessel (6),

the measurement method comprising, for each detector (8), the steps:

- injection, into the corresponding optical waveguide (16), of a secondary interrogation wave having a secondary wavelength at which the secondary dopant has an absorption peak, the smallest difference between the secondary wavelength and a wavelength corresponding to an absorption peak of the primary dopant being greater than or equal to a predetermined minimum difference;
- detection of a secondary response wave emitted by the corresponding optical waveguide (16) from the secondary interrogation wave;
- calculation, from the detected secondary response wave, of a piece of information relating to a concentration of secondary dopant in the corresponding optical waveguide (16); and
- based on the piece of information relating to the calculated concentration of secondary dopant, and conversion data relating to the nuclear reactor, determination of a fast neutron fluence experienced by the wall (4) of the vessel (6) for a predetermined secondary period.

**FIG.1**

2

8

10

6

4

12

11

4

6

13 12

14

15

38

50

47

9

10

40

8

46

16

52 54

48

44

$\lambda_2$ $\lambda_{2,}$ $\lambda_{2,2}$ $\lambda_3$ $\lambda_{3,}$ $\lambda_{3,2}$

42

20 18

56

**FIG.2**

FIG.3

FIG.4

FIG.5

**EP 4 085 275 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006249664 A
- JP H09218270 B
- US 2014061487 A